# EUROPEAN PATENT APPLICATION

(11) **EP 4 851 785 A1**
(43) Date of publication of application: **09.12.2026**
(21) Application number: 25180862.2
(22) Date of filing: 04.06.2025
(51) Int. Cl.: G06F 8/65

(54) **METHOD, COMPUTER PROGRAM, AND APPARATUS FOR PRIORITIZING DEPLOYMENT OF UPDATES FOR A FLEET OF VEHICLES**

(71) Applicant: Bayerische Motoren Werke Aktiengesellschaft, 80809 München (DE)
(72) Inventor: Hartauer, Robin, 80639 München (DE); Weber, Arian, 82319 Starnberg (DE)

(57) **Abstract**

The present disclosure relates to a computer-implemented method, a computer program, and an apparatus for prioritizing deployment of updates for a fleet of vehicles. The method comprising obtaining (110) information on vehicles of the fleet of vehicles, determining (120), based on the information on the vehicles, a score, with the score being based on a likelihood that an update deployed to the vehicle is installed within a defined time frame after deployment, determining (130) a prioritization of vehicles, with the prioritization prioritizing vehicles having a score indicating a higher likelihood of the update being installed within the defined time frame after deployment over vehicles having a score indicating a lower likelihood of the update being installed within the defined time frame after deployment, and deploying (160) an update to the fleet of vehicles based on the prioritization.

## Description

The present disclosure relates to a method, a computer program, and an apparatus for prioritizing deployment of updates for a fleet of vehicles.

Conventional vehicle updates have traditionally required physical visits to dealerships, where technicians manually install software or firmware updates. This process is time-consuming, logistically complex, and costly for both manufacturers and customers. It also results in low compliance rates, as many vehicle owners postpone or skip these inconvenient service appointments, leaving potential performance issues or safety vulnerabilities unaddressed.

Over-the-Air (OTA) updates represent a significant advancement, allowing manufacturers to remotely deliver software updates to vehicles through wireless networks, similar to smartphone updates. This technology enables automakers to enhance vehicle functionality, fix bugs, improve performance, and address security vulnerabilities without requiring customers to visit service centers. OTA updates can apply to various vehicle systems, from infotainment and connectivity features to critical driving functions and advanced driver assistance systems.

OEMs face several challenges when deploying OTA updates. In particular, while the goal is to reach as many vehicles as possible as quickly as possible, prioritization of vehicles is a challenge, as, in many cases, errors, limitations in the availability of the vehicles, and the need for the driver to initiate the updates (in case automatic updates are not available) lead to delays in update installations, even if the updates have been successfully transmitted to the vehicles.

There may be a demand for an improved concept for prioritizing the deployment of updates to vehicles, for example, using an OTA mechanism.

This demand is addressed by the subject matter of the claims.

Various examples are based on the finding that OEMs have access to data that allows them to predict the likelihood, for groups of vehicles, of whether an update, if transmitted to the vehicle, will also be installed in a timely manner. This way, updates can first be deployed to vehicles that have a higher likelihood of the update being installed in a timely manner, resulting in faster overall deployment of updates to vehicles. This way, updates improving the security and safety of operating the vehicles are applied faster across a fleet of vehicles, leading to more vehicles receiving the improvements to safety and security first. This improves the overall safety and security of the fleet of vehicles.

Some aspects of the present disclosure relate to a method for prioritizing deployment of updates for a fleet of vehicles. The method comprises obtaining information on vehicles within the fleet of vehicles. The method comprises determining, based on the information on the vehicles, a score. The score is based on a likelihood that an update deployed to a vehicle is installed within a defined time frame after deployment. The method comprises determining a prioritization of vehicles, wherein the prioritization prioritizes vehicles having a score indicating a higher likelihood of the update being installed within the defined time frame after deployment over vehicles having a score indicating a lower likelihood of the update being installed within the defined time frame after deployment. The method comprises deploying an update to the fleet of vehicles based on the prioritization. This way, the likelihood of successful update installation is maximized, ensuring efficient use of resources and reducing redundant deployment attempts.

In some examples, the update may be deployed gradually to the vehicles of the fleet of vehicles according to the prioritization. This results in controlled and manageable deployment of updates, reducing network congestion and ensuring smooth rollout without overwhelming the wireless channel.

According to an example, the update may be deployed gradually based on cellular bandwidth available for the deployment. This enables adaptive deployment that aligns with available network capacity, improving bandwidth usage and preventing service disruptions during updates.

For example, the update may be deployed to additional vehicles until a share of cellular bandwidth used reaches an upper threshold, with the deployment to additional vehicles being continued when the share of cellular bandwidth used drops below a lower threshold. This ensures dynamic bandwidth optimization, balancing update delivery with network availability to maintain system reliability and avoid incurring costs for additional cellular bandwidth.

For example, the prioritization may be determined for deployment of the update via a cellular mobile communication transceiver of the respective vehicle. Prioritization is particularly relevant for OTA updates, as the OTA channel is a bottleneck in deployment.

In various examples, the information on a vehicle indicates whether automatic updates are enabled for the vehicle, and the score may be based on whether automatic updates are enabled for the vehicle. This increases the probability of successful updates by prioritizing vehicles with automatic update settings, enhancing overall deployment efficiency.

In various examples, the information on a vehicle indicates whether the update or one or more past updates was or were requested manually by a user of the vehicle. The score may be based on whether the update or the one or more past updates was or were requested manually by the user of the vehicle. This tailors deployment to user behavior, improving update adoption rates by focusing on vehicles with active user engagement.

In some examples, the information on the vehicle indicates one or more likely error conditions being present, such as parking of the vehicle at a steep angle or degradation of a battery of the vehicle. The score may be based on the presence of the one or more likely error conditions. This prevents updates during unstable conditions (e.g., unstable battery or parking), reducing the risk of deploying updates to vehicles that are unsuitable for installing the update, at least for the moment.

In various examples, the information on a vehicle indicates a time between deployment of one or more past updates and installation of the respective update in the vehicle. The score may be based on an average or median time between deployment of past updates and installation of the past updates for the vehicle. This allows predictive prioritization based on historical performance, improving the accuracy of scheduling and resource allocation.

According to an example, the information on a vehicle indicates a time zone the respective vehicle may be in, and the score may be based on a time at which deployment of the update may be scheduled to start relative to the time zone the vehicle may be in. This way, the update can be deployed prior to the rush hours of the respective time zones, during which the users are more likely to interact with the vehicle and install the update.

In some examples, the information on a vehicle indicates a usage pattern of the vehicle, and the score may be based on a usage pattern of the vehicle. This optimizes deployment timing to target times at which users interact with their vehicles, while avoiding conflicts with critical-usage periods.

For example, the information on a vehicle indicates whether a user of the vehicle uses a mobile application for controlling one or more aspects of the vehicle. The score may be based on whether a user of the vehicle uses the mobile application. The score may also be based on whether the user of the vehicle has previously installed at least one update via the mobile application. This enhances user engagement by prioritizing vehicles where users are more likely to actively accept updates, improving trust and compliance. This can be balanced with the likelihood of the user installing the update via the mobile application, which does not require deployment via the OTA channel.

According to an example, the prioritization may be determined or adjusted based on an output of a machine learning model trained to output, based on the information on a vehicle, information on a likelihood that an update deployed to a vehicle is installed within a defined time frame after deployment. This enables the system to take into account difficult-to-quantify causal relationships between the available data and the prediction, improving long-term efficiency and accuracy of prioritization.

In various examples, the method may comprise simulating deployment of the update based on the prioritization, and adjusting the prioritization based on the simulation. This reduces risks associated with deployment by testing strategies in a simulated environment, ensuring improved prioritization before actual implementation.

Another aspect of the present disclosure relates to a computer program having a program code for performing the above method, when the computer program is executed on a computer, a processor, or a programmable hardware component.

Another aspect of the present disclosure relates to an apparatus for prioritizing deployment of updates for a fleet of vehicles. The apparatus comprises one or more interfaces and one or more processors. The apparatus is configured to perform the above-described method.

Some examples of apparatuses, methods and/or computer programs will be described in the following by way of example only, and with reference to the accompanying figures, in which:
- Fig. 1a: shows a flowchart of an example of a method for prioritizing deployment of updates for a fleet of vehicles;
- Fig. 1b: shows a schematic diagram of an apparatus for prioritizing deployment of updates for a fleet of vehicles;
- Fig. 2: shows three examples of update completion curves;
- Fig. 3: shows a class diagram of a scenario data structure;
- Fig. 4: illustrates the lifecycle of a single action from instantiation to completion over the course of a simulation;
- Fig. 5: shows a class diagram of an interface for strategies;
- Fig. 6: shows the structure and embedding of prediction models;
- Fig. 7: shows an overview of a feature selection process;
- Fig. 8: shows a pseudocode representation of an ADAPT algorithm;
- Fig. 9a: shows a table of relevant attributes of scenarios for evaluation;
- Fig. 9b: shows the simulation results of a baseline strategy;
- Figs. 10a and 10b: show a comparison of MNO throughput consumption under a stress test scenario;
- Fig. 10c: shows a comparison of time performance under a regular scenario; and
- Fig. 10d: shows a comparison of time performance under a critical scenario.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

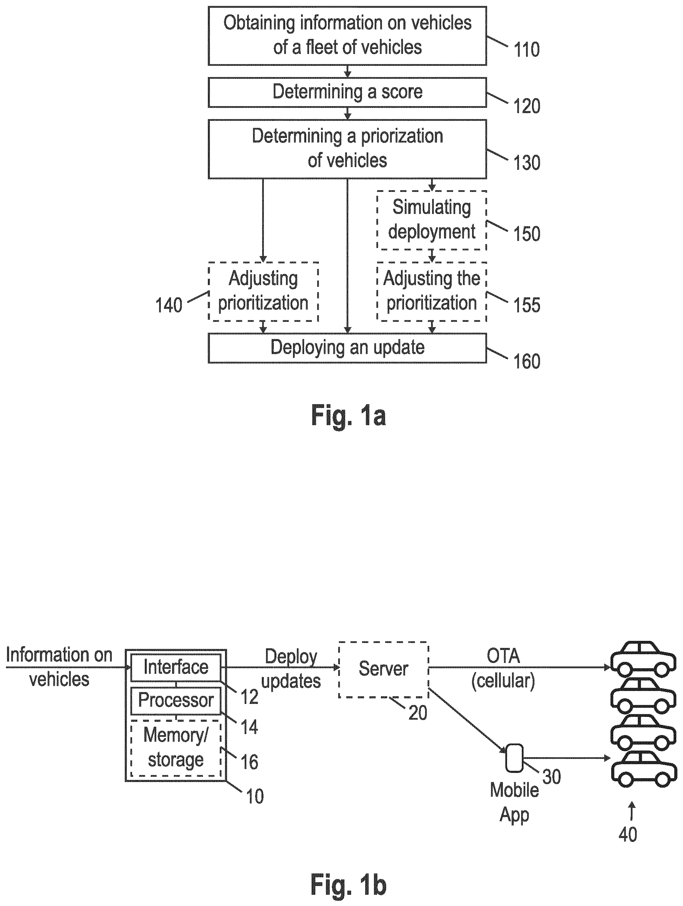

Fig. 1a shows a flowchart of an example of a method for prioritizing deployment of updates for a fleet of vehicles 40 (shown in Fig. 1b). The method comprises obtaining 110 information on vehicles of the fleet of vehicles 40. The method comprises determining 120, based on the information on the vehicles, a score. The score is based on a likelihood that an update deployed to a vehicle is installed within a defined time frame after deployment. The method comprises determining 130 a prioritization of vehicles. The prioritization prioritizes vehicles having a score indicating a higher likelihood of the update being installed within the defined time frame after deployment over vehicles having a score indicating a lower likelihood of the update being installed within the defined time frame after deployment. The method comprises deploying 160 an update to the fleet of vehicles based on the prioritization. The method of Fig. 1a is a computer-implemented method.

For example, as shown in Fig. 1b, the method may be performed by a computer system. Fig. 1b shows a schematic diagram of an apparatus 10, such as a computer system, for prioritizing deployment of updates for a fleet of vehicles. This apparatus 10 is configured to perform the method of Fig. 1a. The apparatus 10 comprises one or more interfaces 12 (for obtaining the information on the vehicles of the fleet of vehicles) and one or more processors 14 (for determining the score, determining the prioritization, adjusting the prioritization (e.g., based on a simulation), and triggering deployment of the update) that are coupled with the one or more interfaces 12. Optionally, the apparatus 10 further comprises memory/storage circuitry 16 (for storing information, such as models used to calculate the score and/or determine/adjust the prioritization) that is coupled with the one or more processors 14. For example, the one or more processors 14 may be configured to provide the functionality of the apparatus 10, in conjunction with the one or more interfaces 12 (for exchanging information, e.g., for obtaining the information on vehicles of the fleet of vehicles and/or for triggering a server 20 to deploy the updates to the fleet of vehicles 40) and/or the memory/storage circuitry 16 (for storing information, such as models used for determining/adjusting the score and/or prioritization, or machine-readable instructions). For example, the one or more processors 14 may be configured to execute the machine-readable instructions to provide the functionality of the apparatus 10.

In the following, the features of the method of Fig. 1a, a corresponding computer program, and the apparatus 10 of Fig. 1b will be discussed in more detail with respect to the method of Fig. 1a. Features introduced in connection with the method of Fig. 1a may likewise be included in the corresponding computer program and apparatus 10.

Various examples of the present disclosure relate to the deployment of updates to a fleet of vehicles. The method for prioritizing the deployment of updates for a fleet of vehicles, as shown in Fig. 1a, is an automated process designed to improve the scheduling and delivery of software updates.

The method starts with obtaining 110 the information on the vehicles of the fleet of vehicles 40. In general, the information on the vehicles characterizes the vehicles of the fleet of vehicles. It provides information that indicates, taken together, the likelihood that the respective vehicles will have updates installed in a timely manner if they are deployed to the vehicle. The information on vehicles of the fleet of vehicles may include information such as connectivity status, usage patterns, historical update performance, and current operational metrics. In general, while the information on the vehicles relates to the individual vehicles, it may be collected and managed by a backend server. Obtaining the information on the vehicles may thus include querying the backend server for the information on the vehicles. The backend server may aggregate the information on the vehicles over time, allowing the present method to obtain and process the information on the vehicles to determine the score and determine the prioritization.

In the proposed concept, the information on the vehicles is used to determine a score, with the score being based on a likelihood that an update deployed to the vehicle is installed within a defined time frame after deployment (such as within an hour, within six hours, within a day, or within a week), i.e., in a timely manner. In particular, the score is a numerical or categorical value assigned to each vehicle to reflect its readiness and likelihood of successful update installation (within the defined time frame after deployment). For example, the score may distinguish between different categories. For example, the score may be based on the categories of high likelihood of the update being installed in a timely manner, medium likelihood of the update being installed in a timely manner, and low or no likelihood of the update being installed in a timely manner. Alternatively, a larger number of categories may be used, or the score may be a floating-point value that indicates the likelihood that an update deployed to the vehicle is installed within a defined time frame after deployment within a range of values (e.g., within [0,1]).

The score is determined 120 based on the information on the vehicles. To determine the score, the information on the vehicles is processed to determine features within the information on the vehicle that indicate a higher or lower likelihood of the update being installed in a timely manner. For example, the information on a vehicle may indicate whether automatic updates are enabled for the vehicle. This information is highly valuable for the determination of the score, as, when automatic updates are enabled, no user interaction is necessary for the update to be installed. Thus, if automatic updates are enabled, the score may be higher than if automatic updates are disabled. In summary, the score may be based on whether automatic updates are enabled for the vehicle.

Another factor to consider is whether the user of the vehicle is interested in (proactively) installing updates. This can be determined by evaluating whether the user has previously manually searched for and requested an update to be installed. Thus, the information on a vehicle may indicate whether the update or one or more past updates has or have been requested manually by a user of the vehicle. For example, if the update has been requested manually by the user, or if previous updates have been requested manually by the user, it is assumed that the user is generally interested in installing updates (in a timely manner), leading to an increased score (over users that have not requested this or past updates). Thus, the score may be based on whether the update or the one or more past updates has or have been requested manually by the user of the vehicle.

In some cases, data may be available on how fast updates have been installed during previous update deployments. This information is a valuable predictive tool for the determination of the score. For example, the information on a vehicle may indicate a time between deployment of one or more past updates and installation of the respective update in the vehicle. For example, the smaller the time between deployment of one or more past updates and installation of the respective update in the vehicle (in average or median), the higher the score may be. Thus, the score may be based on an average or median time between deployment of past updates and installation of the past updates for the vehicle.

In some cases, while the user may be willing to install an update (as evidenced by past behavior or automatic updates being activated), the update is likely to fail, e.g., as a battery of the vehicle is degraded or the vehicle is parked at a steep angle (leading to updates being disabled for safety reasons). In such likely error conditions, the score may be (severely) decreased, as deploying the update may be pointless. Thus, the information on the vehicle indicates one or more likely error conditions being present, such as parking of the vehicle at a steep angle or degradation of a battery of the vehicle. Consequently, the score may be based on the one or more likely error conditions being present.

In general, deployment of an update is started at a pre-defined time. Usage of the vehicles, and thus the likelihood that the update is installed, often depends on whether the car is being used. If the user does not use the car (e.g., during the night, or during working hours), he or she cannot trigger the update. Thus, at least when automatic updates are not enabled, updates may be deployed such that the update is available for installation when the user is interacting with the car, e.g., during rush hour. These rush hours depend on the time zone the vehicle is in. Thus, the information on a vehicle may indicate a time zone the respective vehicle is in. For example, the country the vehicle is in may be used as a proxy for the time zone. The score may be based on a time at which deployment of the update is scheduled to start relative to the time zone the vehicle is in. This way, the update can be deployed prior to the rush hours of the respective time zones, during which the users are more likely to interact with the vehicle and install the update.

More generally, the usage pattern of the vehicle may be considered. For example, some vehicles are used professionally, such as taxis or ride-hailing vehicles, or as chauffeur-driven vehicles. Such vehicles are often required to be available at short notice, so the user might be disinclined to start an update at any given time before the end of their shift. Thus, the information on a vehicle may indicate a usage pattern of the vehicle. Accordingly, the score may be based on the vehicle's usage pattern.

Another factor is whether the user uses a mobile application for interacting with the vehicle. For example, the information on a vehicle may indicate whether a user of the vehicle uses a mobile application for controlling one or more aspects of the vehicle. In such cases, the user is assumed to be technology-friendly, which may be indicative of the user's willingness to install new updates sooner rather than later. Thus, the score may be based on whether a user of the vehicle uses the mobile application. For example, if the user uses the mobile application, the score may be higher than if the user does not use the mobile application. On the other hand, if updates are also supported via the mobile application, it may be beneficial to let the user install the update via the mobile application running on the mobile device 30 (see Fig. 1b) of the user, without taking up bandwidth of the cellular channel used for OTA updates. Thus, the score may be based on whether the user of the vehicle has previously installed at least one update via the mobile application. If the user of the vehicle has previously installed at least one (past) update via the mobile application, the score may be lowered, to nudge the user to install the update via the mobile application. Another factor is the drivetrain being used. For example, four different drivetrains may be distinguished - internal combustion engine drivetrains, mild hybrid drivetrains (with an internal combustion engine and an electric motor(s) being fed by a battery that cannot be charged externally), plug-in hybrid drivetrains (with an internal combustion engine and an electric motor(s) being fed by a battery that can be charged externally), and battery-electric drivetrains. The drivetrain being used is an important indicator for the target demographic, with more technology-friendly (and thus update-affine) users leaning towards using battery-electric drivetrains and less technology-friendly (and thus update-affine) users leaning towards using internal combustion engine drivetrains. Thus, the information on a vehicle may indicate the drivetrain of the vehicle, and the score may be determined based on the drivetrain of the vehicle.

More features that are relevant to the determination of the score can be found in the sections Explicit Vehicle Features, Features Derived from Usage Patterns, and External Features. The determination of the score is further discussed in the sections Association of Features with Prediction Tasks, Description of the Feature Association Algorithm, Effect Size Calculation, The ADAPT Strategy and Overview of the ADAPT Algorithm.

The score is then used to determine the prioritization of vehicles, with the prioritization favoring vehicles having a score indicating a higher likelihood of the update being installed within the defined time frame after deployment over vehicles having a score indicating a lower likelihood of the update being installed within the defined time frame after deployment. For example, the ADAPT algorithm discussed in sections ADAPT Strategy and Overview of the ADAPT Algorithm may be used for this purpose. Moreover, other techniques from the section Prioritization of Vehicles may be used. For example, the vehicles may be grouped according to their score (as many vehicles may have the same score), and vehicles having the highest score may be prioritized (i.e., so that the update is deployed to them first) over vehicles having a lower score.

In the proposed concept, the prioritization is performed to mitigate the impact of bottlenecks of the deployment pipeline (between server 20 and fleet of vehicles 40). One important bottleneck is the cellular channel used for deployment of OTA updates. Vehicle OEMs typically have contracts with cellular providers, allowing them use of the cellular channel at a given maximum bandwidth, e.g., 10 Gbit/s. While OEMs may exceed this threshold, additional fees may be incurred as a result, incentivizing the OEMs to stay below the threshold. This may be taken into account when performing the prioritization and deployment of updates, e.g., by nudging users to install the update via the mobile application on their mobile device 30, which does not count towards the OEMs cellular bandwidth. Accordingly, the prioritization may be determined 130 for deployment of the update via a cellular mobile communication transceiver of the respective vehicle.

In some examples, the determination of the score and prioritization can be improved by using a machine learning model to process the respective information on a vehicle, e.g., to determine or adjust the vehicle's score, and thus the prioritization. In other words, the prioritization may be determined 130 or adjusted 140 based on an output of a machine learning model. Machine learning refers to algorithms and statistical models that computer systems may use to perform a specific task without using explicit instructions, instead relying on models and inference. For example, in machine learning, instead of a rule-based transformation of data, a transformation of data may be used that is inferred from an analysis of historical and/or training data. For example, the content of images may be analyzed using a machine learning model or using a machine learning algorithm. In order for the machine learning model to analyze the content of an image, the machine learning model may be trained using training images as input and training content information as output. By training the machine learning model with a large number of training images and associated training content information, the machine learning model "learns" to recognize the content of the images, so the content of images that are not included in the training images can be recognized using the machine learning model. The same principle may be used for other kinds of sensor data as well: By training a machine learning model using training sensor data and a desired output, the machine learning model "learns" a transformation between the sensor data and the output, which can be used to provide an output based on non-training sensor data provided to the machine learning model.

Machine learning models are trained using training input data. The examples specified above use a training method called "supervised learning". In supervised learning, the machine learning model is trained using a plurality of training samples, wherein each sample may comprise a plurality of input data values, and a plurality of desired output values, i.e., each training sample is associated with a desired output value. By specifying both training samples and desired output values, the machine learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms, but are based on learning from examples using a similarity function that measures how similar or related two objects are.

In the present case, the machine learning model is trained to output, based on the information on a vehicle, information on a likelihood that an update deployed to a vehicle is installed within a defined time frame after deployment, e.g., the score or a value that can be taken into account when determining the score. For example, the machine learning model may be trained, using supervised learning, to output a classification ("high likelihood of timely installation", "medium likelihood of timely installation", "low or no likelihood of timely installation") representing the likelihood that an update deployed to a vehicle is installed within the defined time frame after deployment, or a regression (e.g., the score), e.g., a floating-point value on a scale of 0 to 1. Training can be done using supervised learning, with data from past update deployments being used for the training. For example, information on a vehicle from a past update deployment may be used as training input, and a score or classification based on the actual time it took the vehicle to install the update may be used as desired output.

Machine learning algorithms are usually based on a machine learning model. In other words, the term "machine learning algorithm" may denote a set of instructions that may be used to create, train or use a machine learning model. The term "machine learning model" may denote a data structure and/or set of rules that represents the learned knowledge, e.g., based on the training performed by the machine learning algorithm. In embodiments, the usage of a machine learning algorithm may imply the usage of an underlying machine learning model (or of a plurality of underlying machine learning models). The usage of a machine learning model may imply that the machine learning model and/or the data structure/set of rules that is the machine learning model is trained by a machine learning algorithm.

For example, the machine learning model may be an artificial neural network (ANN). ANNs are systems that are inspired by biological neural networks, such as those found in a brain. ANNs comprise a plurality of interconnected nodes and a plurality of connections, so-called edges, between the nodes. There are usually three types of nodes: input nodes that receive input values, hidden nodes that are connected only to other nodes, and output nodes that provide output values. Each node may represent an artificial neuron. Each edge may transmit information from one node to another. The output of a node may be defined as a (non-linear) function of the sum of its inputs. The inputs of a node may be used in the function based on a "weight" of the edge or of the node that provides the input. The weights of nodes and/or edges may be adjusted during the learning process. In other words, the training of an artificial neural network may comprise adjusting the weights of the nodes and/or edges of the artificial neural network to achieve a desired output for a given input. In at least some embodiments, the machine learning model may be a deep neural network, e.g., a neural network comprising one or more layers of hidden nodes (i.e., hidden layers), preferably a plurality of layers of hidden nodes. Alternatively, the machine learning model may be a support vector machine. Support vector machines (i.e., support vector networks) are supervised learning models with associated learning algorithms that may be used to analyze data, e.g., in classification or regression analysis. Support vector machines may be trained by providing an input with a plurality of training input values that belong to one of two categories. The support vector machine may be trained to assign a new input value to one of the two categories. Alternatively, the machine learning model may be a Bayesian network, which is a probabilistic directed acyclic graphical model. A Bayesian network may represent a set of random variables and their conditional dependencies using a directed acyclic graph. Alternatively, the machine learning model may be based on a genetic algorithm, which is a search algorithm and heuristic technique that mimics the process of natural selection.

To verify that the prioritization is effective at reaching the goals (speeding up installation of updates while staying within the bandwidth constraints of the cellular contract), a simulation may be performed. For example, the method may comprise simulating 150 deployment of the update based on the prioritization, and adjusting 155 the prioritization based on the simulation. For example, more information on simulation can be found in section Modeling And Simulation of the Rollout System and following.

Deploying the update is the final stage of the process, where the prioritized updates are distributed to vehicles according to the prioritization. Deployment strategies may include staggered rollouts or bandwidth-aware scheduling to avoid overloading networks. Thus, the update may be deployed gradually to the vehicles of the fleet of vehicles, i.e., not deploying the update to all vehicles at once, but in a manner that preserves the constraint related to the available cellular bandwidth, according to the prioritization. Thus, the update may be deployed gradually based on cellular bandwidth being available for the deployment. This step ensures that updates reach the intended vehicles in a timely and reliable manner, aligning with the overall goal of maximizing deployment success.

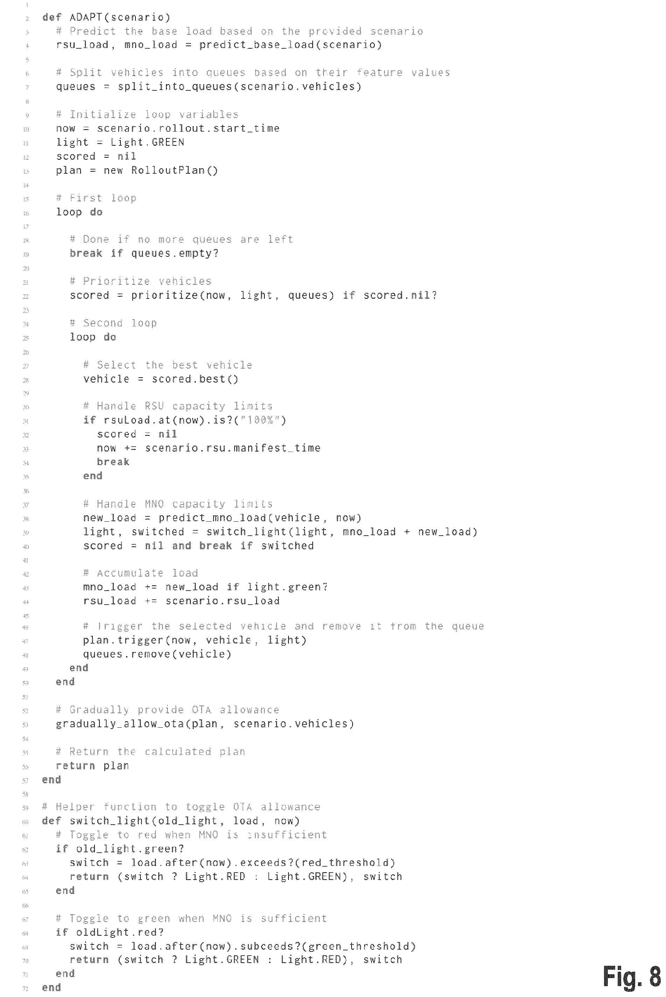

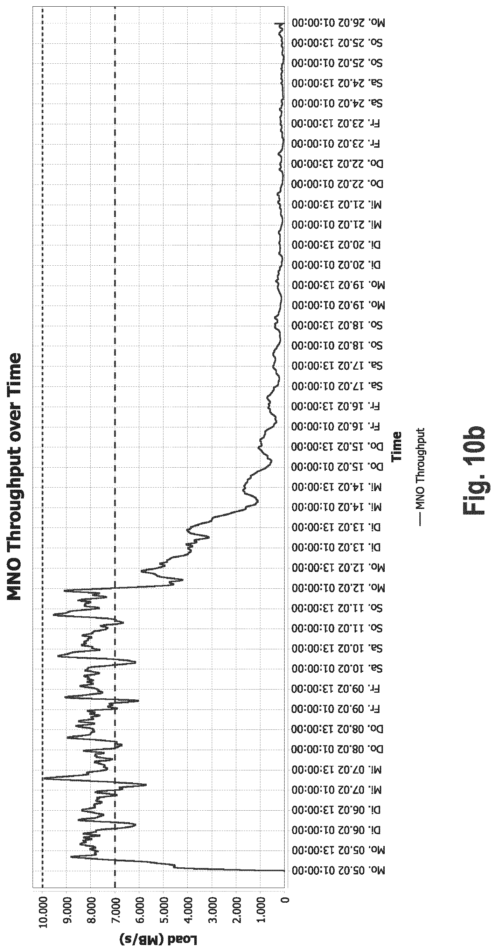

In the ADAPT algorithm (shown in Fig. 8) and corresponding sections of the present disclosure, an approach is used, during a "green light" phase, where the update is deployed to additional vehicles (according to the prioritization) until the next vehicle would violate the bandwidth constraint Then, the light is "switched" to red, and the update is not deployed to additional vehicles until the bandwidth use falls under a lower threshold. Then, the light is "switched" to green again, and the update can be deployed to new vehicles. In the meantime, the prioritization may be updated prior to restarting, e.g., as the current time may have an influence on factors that are time-dependent (such as the time of the rush hour). In summary, the update may be deployed 160 to additional vehicles until a share of cellular bandwidth used reaches an upper threshold (causing the light to be switched to red). The deployment to additional vehicles may be continued when the share of cellular bandwidth used drops under a lower threshold. For example, in Fig. 10b, the lower dashed line (at 7000) indicates the lower threshold, and the upper dashed line (at 10000) indicates the upper threshold. The bandwidth used oscillates between the two thresholds, occasionally dipping below the lower threshold (until the next vehicles have started the download).

The one or more interfaces 12 correspond to one or more inputs and/or outputs designed to receive and/or transmit information. This information can be in digital (bit) values according to a specified code, whether exchanged within a module, between different modules, or even between modules of distinct entities. For example, the one or more interfaces 12 may include interface circuitry configured to handle the reception and/or transmission of such information.

For example, the one or more processors 14 can be implemented using one or more processing units, processing devices, or any means for processing, such as a processor, a computer, or a programmable hardware component equipped with appropriately adapted software. Thus, the described function of the one or more processors 14 can be executed in software, running on one or more programmable hardware components. Such components may include a general-purpose processor, a Digital Signal Processor (DSP), a microcontroller, and more.

The memory/storage circuitry 16 may comprise at least one element of the group of a computer-readable storage medium, such as a magnetic or optical storage medium, e.g., a hard disk drive, a flash memory, a floppy disk, Random Access Memory (RAM), Programmable Read Only Memory (PROM), Erasable Programmable Read Only Memory (EPROM), an Electronically Erasable Programmable Read Only Memory (EEPROM), or network storage.

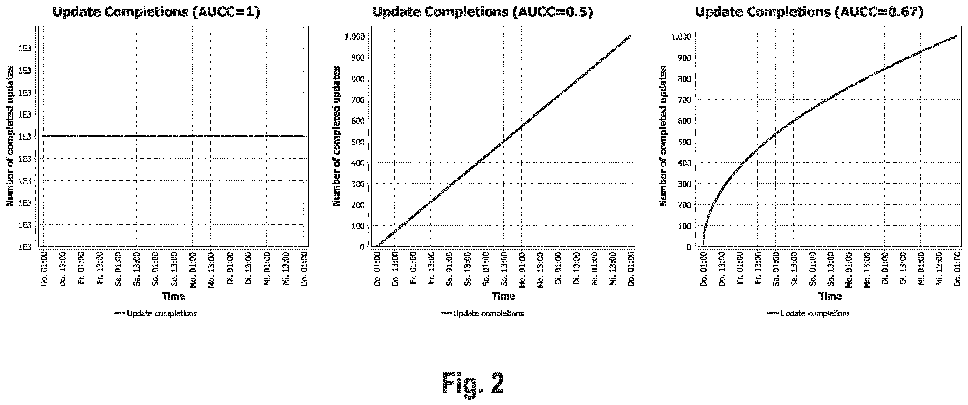

More details and aspects of the method, apparatus 10 and computer program are mentioned in connection with the proposed concept or one or more examples described above or below (e.g., Figs. 2 to 10d). The method, apparatus 10 and computer program may comprise one or more additional optional features corresponding to one or more aspects of the proposed concept or one or more examples described above or below.

Various examples relate to intelligent update scheduling based on different influencing factors (like Mobile Network Operator capacity, backend capacity, ...), vehicle attributes, and customer attributes to improve the update curve in the connected drive fleet. The proposed concept relates to how the update speed can be increased. The mechanism may be used for scheduling updates.

In general, update mechanisms used for vehicles often use a brute-force mechanism that deploys updates to the fleet based on a defined maximum number per second. No intelligent distinction is made as to whether and how quickly a customer will actually install an update. Particularly when OTA downloads are activated, this also results in avoidable costs as the bandwidth used exceeds the guaranteed bandwidth. In such update mechanisms, the deployment is not based on whether a customer will install an update at all, or not. However, it may not make sense to offer customers an update that will not install. Therefore, other customers may be prioritized.

The proposed concept provides an intelligent decision. The Vehicle Identification Number (VIN) of the vehicle may be used to retrieve customer and/or vehicle data, which may be used to decide whether an update should be offered. It uses the calculation of a score per VIN to decide when a customer receives their update (time prioritization), which update content the customer receives (content prioritization), and how they receive their update (Mobile Network Operator-based, cost-neutral, ...). The calculation can be carried out using an algorithmic approach and evaluated by a machine learning algorithm to achieve an improved result.

In particular, a vehicle- or customer-specific update offer may be calculated. It may be important for the OEM that updates offered are installed by the customer as quickly as possible in order to reduce warranty costs and provide the customer with the best possible managed vehicle with the best possible customer experience. The aim may be to reduce warranty costs and reputational damage that would otherwise be caused by product recalls. Various parameters play a role here, such as "Can the vehicle currently perform the necessary download?", "Is the vehicle currently accessible for the backend?", "Does the customer have auto-updates enabled?", "Has the customer installed updates in the past?", "When and how quickly or at what time did he start the installation?", "Does a customer make use of an offer via the mobile application (A4A) or only via OTA directly in the vehicle?", "Is there currently sufficient backend capacity/MNO capacity to carry out the update?".

This historical data (e.g. from a cloud data hub) and data from the live systems (e.g. WakeUp service) may be used to determine the prioritization. The calculated prioritization can be further improved using machine learning models, and can be improved iteratively across updates, e.g., based on historical or live data.

In the following, an example for prioritizing deployment of updates is given.

### Modeling And Simulation of the Rollout System

This section focuses on modeling the system to establish a software-driven framework for the systematic development and evaluation of strategies. It starts by deriving quantitative metrics to formally express the primary goals of strategic decision-making. Next, the rationale, necessity, and advantages of using simulation as a tool for the development and evaluation of strategies is explored. To establish the framework, the concept of scenarios is introduced, which model the static attributes and relationships between entities in the rollout system. From this foundation, the dynamic simulation of update processes and rollouts is described, which forms the core of the evaluation framework. Finally, the interface between the strategies and the simulation are described to formally pinpoint the interactions strategies are able to implement.

### Metrics and Key Performance Indicators

The overarching aim of this disclosure is to develop strategies for improving rollout performance while preserving resources. To ensure that the proposed strategies are both effective and objectively comparable, a quantifiable way of measuring rollout performance is established. This section introduces the metrics and Key Performance Indicators (KPIs) necessary for defining, comparing, and assessing rollout performance.

The primary metrics and KPIs are derived from three main goals that arise from business and operational concerns: Rollout Timeliness, Resource Preservation, and System Responsiveness. All of which will be discussed in more detail in the following sections.

### Metrics for Rollout Timeliness

One primary goal during any rollout is to update as many vehicles as quickly as possible. The importance of timely rollouts stems from both business and operational considerations. Business Goal: From a business perspective, faster rollouts enable the company to meet deadlines and satisfy customer expectations. Customers who are willing and interested to update receive new features early. Critical Bug Fixes: In the case of urgent bug fixes, particularly safety-critical ones, speed becomes much more crucial. The ability to quickly deploy updates across a large number of vehicles is essential, as there is a limited window of time to address such issues and prevent potential rollbacks or even accidents.

Timeliness is quantified in terms of the number of successfully completed updates over time. Fig. 2 presents three examples of update completion curves. The vertical axis show the number of completed updates and the horizontal axis depict the timeframe between the start of a rollout and its targeted end time.

This metric can be used to derive KPIs which represent the durations until a certain percentile of the fleet has been updated. These KPIs are denoted as DP-N% where N is the respective percentile. The metric can also be used to derive a KPI which describes the total number of vehicles that were successfully updated within the target duration, which is denoted as total successes in the period (TSP).

While these KPIs are easily interpretable and useful in a business context, they do not offer a trivial way to directly compare the performance between strategies or rollouts, both at a glance or during code-driven evaluation. Assessing the total number of vehicles that were updated lacks the information on how quickly these updates were completed and the DP-*N*% KPIs, while being more descriptive, cannot be expressed as a single number. Fig. 2 shows Examples of update completion curves and corresponding AUCC (Area Under Completion Curve) values. To allow for direct comparison of time performance using a single, comprehensive KPI, the Area Under Completion Curve (AUCC) is introduced. This KPI addresses the limitations of prior KPIs by capturing the cumulative progress over time. The AUCC is defined as the ratio of the area under the completion curve to the maximum possible area within a specified time frame. Mathematically, it can be expressed as: $AUCC = \frac{{\int }_{{T}_{start}}^{{T}_{end}} C \left(t\right) dt}{N ⋅ \left({T}_{end}-{T}_{start}\right)} ,$

*C*(*t*) is a step function, representing the cumulative number of vehicles completed at time *t, T*start and *T*end are defined as the start and targeted end time of the rollout, and *N* is the total number of vehicles involved in the rollout.

Advantageously, values of the AUCC range from zero to one, making them easily interpretable. A value of zero indicates that no updates were completed in the given time window, while a value of one means that all processes have been completed right at the start of the rollout period. Completion curves, which are steeper at the beginning, lead to a higher AUCC, capturing the goal of updating as many vehicles as fast as possible. An example of completion curves, along with the corresponding values for the AUCC, is presented in Fig. 2.

The combination of the DP-N%, TSP, and AUCC KPIs ensures interpretability in a business context and easy direct comparisons for software-driven evaluation and optimization.

### Metrics for Resource Preservation

Update processes consume various resources during their execution. Currently, processes are limited by two primary bottlenecks: the capacity of RSU hubs to generate manifests for remote software updates (RSU) and the bandwidth managed by mobile network operations (MNO), which is consumed while performing downloads over the cellular network.

As the manifest creation is performed towards the beginning of update processes, it inherently throttles further action execution. This renders the capacity of other channels less critical at the current time. However, future developments could switch this up by introducing major optimizations to the way the manifests are generated. Additionally, new channels or actions might be introduced in the future.

In an abstract sense, each resource, be it network throughput or action execution capacity, can be defined in terms of a maximum capacity that can be provided at any given time. For the purpose of this disclosure, capacities are assumed to be constant. This concept could, however, be easily expanded in the future by allowing capacities to be represented as functions over time.

As the primary metric for any resource, utilization is tracked by dividing the load at any given time by the total capacity of the resource at that time.

As resources should not or cannot be exhausted at any point, only one KPI per resource is derived, that describes whether the load on that resource surpassed its capacity at any time. The logical conjunction of these KPIs describes whether any resource has been overloaded. During comparison and evaluation, any strategy which leads to the overload of any resource is disqualified.

### Metrics for System Responsiveness

Users are able to manually search for updates at any time. At the time of writing, handling of these search requests requires the calculation of the RSU manifest before a definite response can be presented. In practice, this can lead to long response times, especially during time periods with active rollouts, when RSU hubs are under high load. As this could lead to a subpar user experience, system responsiveness is considered a primary goal of a successful rollout.

As the primary metric, the response times for any search request are tracked. That is the time delta between a user starting a manual search for updates and them receiving the response on whether or not an update is available.

From this metric, one KPI for the median customer search response time (MCSRT) is derived. The median is used as the aggregation function, as it is less susceptible to outliers, which makes it a common choice to aggregate response times. For example, no RSU phase should take longer than 20 minutes to complete. So the ratio of search requests that took longer than 20 minutes are tracked.

The combination of these simple KPIs allows for a readable and descriptive representation of system responsiveness in the context of software rollouts.

### Rationale for Using Simulation

Metrics and KPIs were introduced to quantify rollout performance and to enable objective comparisons across different strategies. While these metrics provide a solid foundation for evaluation, the next step is to determine how proposed strategies can be translated into measurable outcomes represented by these metrics. This requires bridging the gap between theoretical strategies and their objective impact. However, several challenges complicate the direct evaluation of strategies:
First, the update process is inherently complex, influenced by a range of external factors such as user interaction patterns and constraints in resource capacity that are shared across multiple processes. This complexity makes it very difficult to mathematically calculate or estimate the metrics and KPIs with sufficient accuracy on paper, as the interplay of processes cannot be easily reduced to straightforward assumptions or calculations.

Second, real-world experiments to evaluate rollout strategies are not feasible at this stage. At the time of writing, the Comfy system has not yet been fully implemented or integrated with established systems. In addition, testing in a live environment could introduce the risk of service disruptions. Even if Comfy was fully operational, the cost and logistical challenges of conducting large-scale tests in a production environment would be infeasible.

Overall, this disclosure necessitates the conduction of virtual experiments to provide a quantitative evaluation of strategies, as well as a structured framework for their development. That being granted, a simulation offers additional benefits, which make it stand as a valuable tool on its own: Risk-Free Testing: Strategies can be tested without affecting real systems or customers. This is crucial for avoiding unintended disruptions during the evaluation phase of experimental strategies. Cost Efficiency: Simulations eliminate the need for resource-intensive real-world trials, allowing strategies to be explored without overhead during their initial development. Controlled Environment: Simulations enable precise control over all involved variables, making it possible to isolate the effects of specific factors, such as download allowances or different bandwidth constraints. Furthermore, this precise control ensures that different scenarios can be replicated over multiple runs of the simulation, thus ensuring repeatable results and enabling the immediate comparison of different strategies. Scalability: Simulations can model millions of vehicles, capturing system-wide interactions and bottlenecks that would be difficult to observe in smaller tests. Predictive Insights: Simulations allow for the evaluation of strategies in advance of their actual execution, providing insights into resource usage and update times, not only for current scenarios but also for future prognosis. Development Environment: Strategies can be iteratively refined based on the results of simulation runs before real-world implementation. Using a simulation also alleviates the dependency on implementation details of the real systems and provides a simplified framework for the development of strategies.

### Modeling of Scenarios

The design and implementation of a simulation build upon a conceptual and explicit model of the static entities that are involved. Scenarios serve as a static representation of these entities regarding their attributes and relationships.

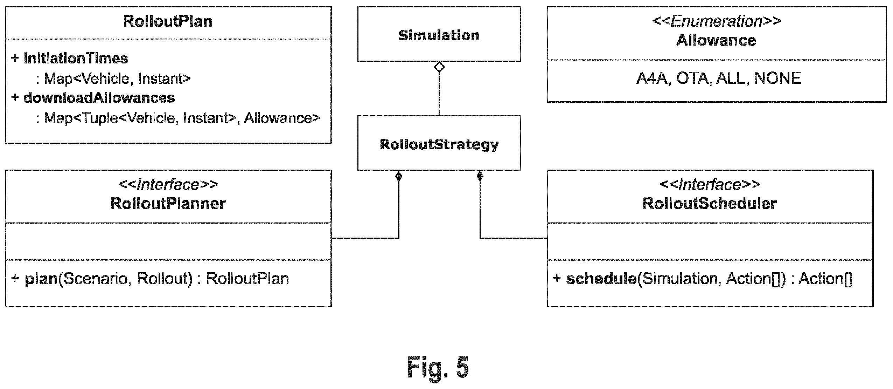

In an example, Java was used, so an object-oriented approach to structuring this data was employed. Figure 5.2 shows the scenario model as a class diagram. Specific scenarios are defined using data objects, which are instantiations of the scenario model classes. Notably, these classes do not implement the behavior of entities but merely serve as wrappers for data. Scenario entities do not contain any mutable state that is changed over the course of a simulation. For example, while a channel entity might define a certain capacity, the current utilization of that entity is not depicted in the scenario.

This allows for a clear separation of concerns between the structure of entities in terms of their attributes and behavior. While the behavior is modeled by the simulation, scenario data can be reused across components of the framework, allowing both strategies and the simulation to work with identical data structures.

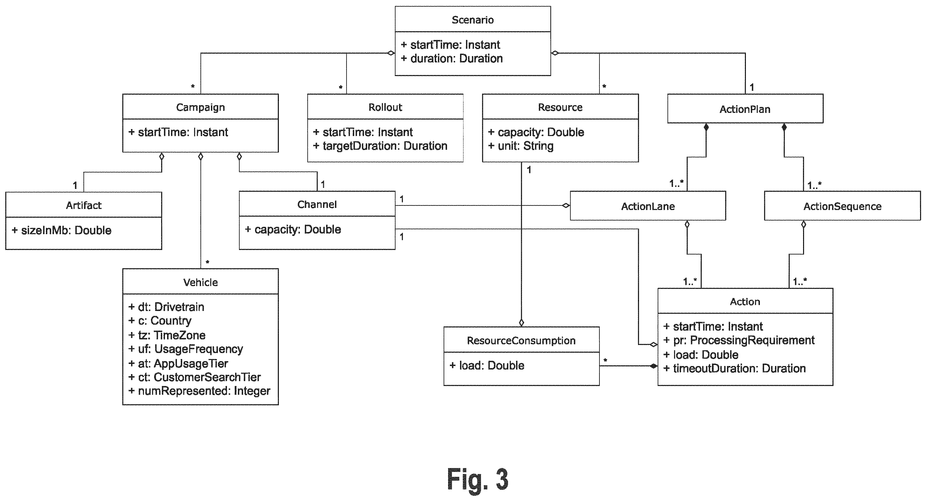

Fig. 3 shows a class diagram of the scenario data structure. The entry point to the model is the Scenario. This class serves as a wrapper for a set of data objects that will be described in the following. Simulation Timeframe: The Scenario class defines the start and end instants of the relevant timeframe that is of primary interest. Channels: In the real system, channels are backend components responsible for the execution of certain tasks called actions. In the abstraction, channels are reduced to this functionality. Each channel has a capacity that defines how many actions can be processed in parallel. Campaigns: Campaigns are modeled to closely match their equivalent in the real system. Each campaign defines a set of target vehicles and an artifact that should be deployed. In addition, campaigns define a time instant after which they become active. Rollouts: Rollouts are simply defined by a start time instant and target duration. The campaigns which apply for vehicles and the actions, which therefore need to be executed, can be derived from other entities which are described in this section. A single scenario can define multiple rollouts. Resources: Resources define their maximum capacity at any point in time, as well as a unit in which this capacity is given. This abstraction allows for the generic representation of various resources, ensuring easy expandability for future use cases. Actions: Action entities serve as a static depiction of any one backend task. Different types of actions can be modeled by instantiating this class with varying attributes. In the context of the scenario, each action instance represents one type of backend task like the manifest creation or the AAD simulation. Actions also reference the channel they need to be executed on and provide a load value that defines how much capacity will be consumed during execution. In addition to channel capacities, actions may also consume other, generic resources. For example, because the communication with vehicles consumes network throughput. Therefore, the Action class holds an array of ResourceConsumption objects, which reference the resource that should be consumed, as well as the load that will be produced while processing. Lastly, as the execution of some actions does require vehicle interaction, there is an attribute encoding potential requirements on the vehicle's connectivity state. This is implemented as an enum, which expresses the minimum required level of connectivity, like online or walkable. Action Lanes: In general, not every update process includes all actions. If, for example, there is no RSU campaign, there is no need to calculate the RSU manifest. To model this, the concept of action lanes is used. A lane defines which actions will need to be executed in order to deploy a campaign. The actions referenced in a lane should only be executed if there is a corresponding applicable campaign. Action Sequences: Action lanes define which actions need to be executed, given a set of campaigns that apply to a vehicle. An action sequence defines the order in which these actions need to be executed. Sequences therefore include actions that are part of different lanes. Action Plans: An action plan holds multiple sequences which describe the actions that need to be executed during different stages of the update process, like the initialization. It also holds multiple action lanes which describe which of those actions should be executed, given a set of campaigns that apply. This class can therefore be considered a blueprint to derive the types of actions that are required as well as their ordering and placement across stages in the update process. Vehicles: Vehicles are modeled in terms of their key attributes. Notably, the selection of these attributes plays a critical role in determining the accuracy of predictions for future usage behavior. Considerable effort is put into the identification of these attributes, based on data availability and knowledge of the domain. The rationale behind the final selection will be detailed in a following section.

A single run of the simulation can involve millions of individual vehicles. This can pose problems to runtime performance, especially on constrained hardware. To enhance efficiency during development, an additional attribute was introduced to define the number of vehicles a single entity represents. In the simulation, it is assumed that all vehicles which are represented by one entity behave in absolute synchronicity. This has shown to improve runtime performance considerably, while having a negligible impact on the results, as long as small numbers are chosen.

### Simulation of Rollouts

The previous section already established the basis for the simulation by introducing the relevant entities and their relationships, represented in the form of a scenario data model. While scenarios present a static depiction of attributes and relationships between entities, they do not provide a model of the dynamic processes that occur during software update rollouts.

The next step is to bring these scenarios to life by modeling the dynamic progression of the real-world update processes that were described afore. This section aims to outline the functionality of the simulation implemented for that purpose.

### Basic Concepts and Abstractions

As with any static model or simulation, it is essential to provide meaningful abstractions to capture the essence of the real-world system at a level of abstraction that makes it practically useful. The primary focus of the simulation lies in the resource consumption and timeliness of updates during rollouts. It needs to provide reliable values for the metrics. Furthermore, the simulation needs to provide a realistic interface for the planning and scheduling strategies derived from leverage points. Software updates are multi-step processes, often spanning multiple days or even weeks. Their execution depends heavily on vehicle usage patterns and involves resource consumption at specific stages. To accurately reflect these dynamics, the simulation models each update process individually. This allows for a model of interaction between processes, especially in their consumption of shared resources, like channel capacities. To emulate these individual processes, the primary abstraction of triggers, actions, and phases is used:
Triggers represent the initiation of an update process. They can either be planned by the backend or result from a manual search for updates that is initiated by customers. Actions are discrete tasks performed in backend systems to perform the update process. Unlike phases, there is direct control over the scheduling of actions. Phases represent continuous periods of vehicle activity during the update process. Unlike actions, phases are largely performed by vehicles. Backend systems are only passively involved. This renders phases more closely tied to customer behavior, making them less predictable and harder to control.

These abstractions form the foundation of the simulation, enabling us to analyze the interplay between resource consumption, user behavior, and operational constraints while providing strategies with realistic points of interaction.

### Modeling using Discrete Event Simulation

The simulation is implemented as a discrete event simulation (DES). DES and DesmoJ were used as the modeling framework, as it provides several advantages, which makes it the perfect fit for the use case. DES ensures computational efficiency, while still capturing essential state changes and offering the flexibility and maintainability that comes with code-driven simulation approaches.

Discrete event simulations consist of a mutable state that can only be modified by events. Each event occurs at a specific time instant during the simulation timeframe and defines logic to read and modify state. In addition, events can schedule other events at current or future time instants. As logic is defined using code, events are able to implement complex behavior using conditional logic, loops, recursion, and all other programming constructs, allowing for precise control over the simulation. The following sections will outline the overarching approach to modeling said state and events. The most important aspects, namely the mechanisms for action execution and phase progression, will be described in more detail.

### Modeling of State

The entities which are involved in the simulation have already been identified and discussed in the previous chapter on scenarios. The modeling of state in the simulation closely follows this specification. However, in addition to the immutable attributes that are defined in the scenario, entities used in the simulation define mutable state.

A convention of using one additional class per entity was followed, which defines this mutable state and additionally holds a reference to an instance of the corresponding entity class in the scenario as a template. Notably, inheritance was avoided here, as simulation entities generally represent one specific actor or object in a rollout situation, while instances of scenario classes depict shared types. An "Entity" postfix was added to the class name to differentiate scenario from simulation entities. For example, the Action class of the scenario is wrapped in an ActionEntity class for the purpose of the simulation. To ensure conciseness, only the most interesting subset of entities will be detailed, focusing on providing a clear intuition about the overall modeling approach.

Channels: In the scenario, an instance of the Channel class is only defined in terms of a maximum capacity to process actions. For the simulation, these attributes are expanded by mutable variables which hold the actions that are currently enqueued or being processed. A method was defined to obtain the current load that is put on the channel as a consequence of processing actions. Notably, these attributes only capture the state of a channel at any one point in time. Changes to this state will overwrite old values, to ensure computational efficiency. The ChannelEntity class also provides methods to change state in a way that is meaningful from the outside. For example, there are methods to enqueue actions or process the actions that are currently enqueued.

Actions: An action instance, in the context of the scenario, represents a type of backend task. In the simulation, an instance of the ActionEntity class is used to represent one specific action that needs to be processed for a specific vehicle. Thus, the attributes are expanded, defined in the Action by a reference to that vehicle. A mutable value was introduced that encodes the current state of execution for the action.

Vehicles: Each vehicle entity maintains a reference to the update process currently associated with it. This object encapsulates attributes, like the trigger used to initiate the update, the specific action instances that must be executed, and the overall state and stage in the update lifecycle. The initiation of an update - as a state change - is achieved by creating and attaching an update process entity to the corresponding vehicle entity.

While numerous additional entities exist within the simulation system, all adhere to the same structure. They define attributes to represent the relevant aspects of the current state and provide methods to facilitate meaningful state transitions. The actual execution of state changes, however, is orchestrated through events, which are used to define the transitional logic.

### Modeling of Events

Any change to the state is made by events. One dedicated class is used to model any specific type of event that is relevant to the simulation. These classes will be instantiated with references to the entities they operate on, and scheduled at a specific time instant during the simulation period. Once the simulation time has progressed to that instant, the code that is defined in the class will be invoked, potentially making changes to the state of the entities or scheduling new events. The simulation ends once no further events are scheduled, or the end of the simulation period is reached.

For example, the BackendTriggerEvent class is used to implement the behavior of a backend trigger, to start the update process for one vehicle. This class will be instantiated by passing an instance of the VehicleEntity, for which the process should be started. Upon invocation, the event will check whether there already is a running update process for that vehicle. If there is, the event will be terminated early, as there can only be one active update process per vehicle. Otherwise, the new update process will be initialized, thereby changing the state of the vehicle. Then a new InitializationStarted event will be instantiated and scheduled to progress the update for the vehicle. This chain of events continues until the update completes with a success or an error, in which case no further events will be scheduled for that process.

The sequence of events is modeled to mirror the structure of update processes in the real system. For the sake of brevity, a detailed description of every individual event will not be provided. Instead, the following chapters will focus on the most important aspects of the simulation, namely the execution of actions and the progression through various phases.

### Modeling of Action Execution

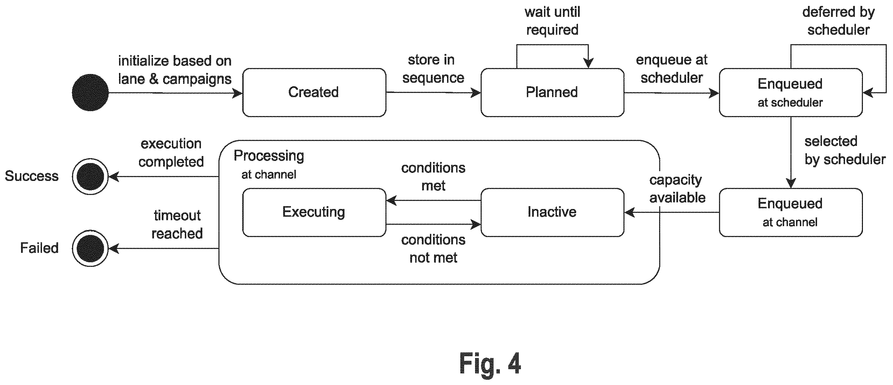

The execution of actions on channels makes the first of two key components of any update process. This chapter outlines the model for managing action execution. Action entities progress through various states of execution throughout the simulation. Fig. 4 illustrates the lifecycle of a single action from instantiation to completion over the course of the simulation.

Initialization: Initially, a new action instance is created during the internal initialization stage of the update. This happens according to the target vehicle, campaigns that are active for that vehicle and action lanes that are defined in the scenario. At this stage, the action is added to the action plan of the vehicle, where it will remain until the update process has progressed to a point which requires its execution.

Enqueueing at the scheduler: When it comes time to execute the action, it will be enqueued within a scheduling entity. At this point, the action is either selected for immediate processing or deferred to a later time and selected during subsequent scheduling invocations. The decision regarding when exactly an action should be processed at a channel can be implemented by strategies.

Enqueueing at the channel: Once the scheduler selects an action for processing, it is enqueued at the channel that is specified in the scenario template. The action remains idle in this queue until the channel has the necessary capacity to begin processing.

Processing at the channel: Once the required capacity becomes available, the channel will start to actively process the action. For actions that require vehicle interaction, the respective vehicle must be in a specific connectivity state to allow for active execution. A decoupled model is employed to predict this state, as it involves customer behavior. This results in time windows during which the action is executed.

Finishing of processing: Once the action has been fully executed, either successfully or due to a timeout, it is marked as complete. This frees capacity on the channel, and allows the update process for the vehicle to progress further.

### Modeling of Update Phases

The concept of actions alone does not provide a sufficient description of update processes. In addition to backend tasks, which can be scheduled and controlled by the backend, there are certain phases during which vehicles operate largely by themselves. Examples of this are the download and check activation preconditions phases of the update. Modeling these phases requires a different focus: Instead of the functionality of backend systems, the main complexity arises from the fact that the course of phases is highly dependent on vehicle usage patterns. Thus the simulation of phases itself is rather simple.

A convention of using two separate events for the modeling of each phase was used. The first event marks the time instant when the phase is started for a vehicle, while the second event marks its completion. At this level of abstraction, this disclosure is mainly concerned with two properties of phases: the duration until completion and the final result status (e.g., success or external error). The download makes an exception, as here the vast majority of network throughput is consumed.

The prediction of these properties is decoupled from the simulation via a set of prediction models. Therefore, phase progression is simply modeled by invoking a respective prediction model, and scheduling an event to end the phase after the expected duration, or terminating the update process in case of an error.

### Tracking Metrics and KPIs

The simulation changes state without keeping any past records. However, not only the final state after the simulation is of interest, but also intermediate steps and changes along the way. Beyond the primary metrics and KPI, the range of relevant metrics may evolve or shift based on future interests.

To address this, a decoupled system is employed that integrates with the simulation's event execution through listeners. These listeners capture relevant state changes and record them in permanent data structures, enabling post-simulation analysis and visualization. This approach ensures flexibility and adaptability while keeping a clear separation from the concerns of the simulation.

### Interface for Rollout Strategies

This section aims to consolidate leverage points into a coherent, formal interface that can be implemented to form strategies.

A strategy itself is a wrapper for two delegate objects: a planning and a scheduling component. Both of these components can be mixed and matched freely. However, each component must adhere to a corresponding interface. Both interfaces define a single method that must be implemented and is called by the simulation at appropriate times. Fig. 5 shows a simple class diagram for this structure. Fig. 5 shows a class diagram of the interface for strategies. The remainder of this section will describe these interfaces in more detail.

Planning Interface: The planning method takes in a scenario object and a reference to the specific rollout which should be planned. The result is an instance of a RolloutPlan, which defines a list of trigger times for each individual vehicle. The plan also defines the download allowances that apply for any one vehicle at any given time. The planning component is invoked during the initialization of the simulation. The resulting plan is implemented by scheduling events for the update triggers, as well as for any change in download allowance for any vehicle. The planning component has access to the scenario but naturally lacks any reference to the simulation, as planning is done in advance of the rollout. This allows for strategic planning based on all attributes of the scenario, which are known beforehand.

Scheduling Interface: The scheduling method takes a list of all action objects that are competing to be executed at the current time, as well as a reference to the running simulation. The output is a new list of these actions that defines which actions are selected for processing at the current time, as well as their order. The simulation invokes the scheduling component upon any meaningful change in state while the simulation is running. Most notably, scheduling is performed whenever new actions are queued or processing of an action has been completed by a channel. The list of actions that are returned will be enqueued at their corresponding channel. This interface allows scheduling components to prioritize actions by providing a sort for the list of returned actions. It also allows deferral of actions by omitting them in the returned list. As the scheduling method receives a reference to the running simulation, it is able to read current load values. This enables strategic decision-making based on the state of the system at the time of invocation.

### Prediction Models and Feature Engineering

The simulation that was described above models the overall structure of update processes, focusing on the sequence of actions and phases. This does, however, leave gaps whenever vehicle interaction is involved. The actual course of phase progression and action execution often depends on customer behavior and usage patterns. Accurately predicting this behavior is essential for achieving realistic results and presents a complex challenge on its own, warranting a dedicated chapter to this topic.

In the beginning, two primary datasets analyzed for this purpose are introduced. Next, the various models used to implement the required prediction tasks are introduced. As these models are fundamentally feature-based, the final section of this section details the features that are used and their associations with the models.

### Data Sources

Predicting future customer behavior relies on empirical data that captures patterns of past behavior. For the analyses, it was required to focus on two key aspects: the usage behavior of vehicles to predict future activity and connectivity levels, and past update processes to estimate the duration and results of various phases. To address these objectives, two relational datasets were used: Remote Software Update Cluster 1 and Vehicle State Data History. This chapter outlines the source, structure, scope, and purpose of these datasets, followed by a discussion of important data privacy considerations.

### Outline of Data Sources

Both datasets analyzed in this research are semantic, meaning they have already been cleaned, processed, and maintained. Access to these datasets was provided through AWS Athena, allowing to run SQL queries over a web interface and download the results as CSV files for further code-driven analysis.

Remote Software Update Cluster 1 The Remote Software Update Cluster 1 dataset is derived from reports sent by vehicles upon completion of remote software updates (RSU). These reports include detailed information about the duration of different phases, encountered errors and warnings, download metrics, and internal states such as the battery status. After being normalized and ingested, these reports are maintained within the RSU dataset for future analysis.

In terms of structure, the RSU dataset captures individual update processes through a vast number of fields spread across multiple relational tables, all linked via a common identifier. In addition, the dataset includes records of related entities, such as the campaign that was deployed or the vehicle that underwent the update. Some of the most valuable data points include: Information about the updated vehicle, such as VAN, country, and drivetrain, Details about the overall update process, including download transfer volumes, final result status, and the type of trigger that initiated the update, Time-stamped records of individual stages, such as initialization, downloads, or activation and campaign-specific data, including release dates, update sizes, and download allowances.

In terms of scope, the dataset contains records of about 35 million past update processes across seven million vehicles, spanning back to 2017. While the dataset is very extensive, the number of recorded update processes per vehicle - when only considering production rollouts - only averages around one to three. The RSU dataset has been invaluable for the research. It provides a detailed account of past update processes and the conditions surrounding them, enabling us to make predictions about the course of individual update phases and download behavior.

Vehicle State Data History The vehicle state dataset is built from periodic reports sent by vehicles to backend systems. This data is consolidated into records, each representing the state of one individual vehicle for each period of one full hour. There are around 4.2 million vehicles that are represented in this dataset, with records spanning back to December 2023. This dataset offers valuable insights into vehicle activity states, such as when vehicles tend to be driving or parking, along with connectivity levels. By analyzing this data, daily and weekly patterns in vehicle usage can be identified. These patterns form the basis for predicting future behavior, helping to inform forecasts for both activity levels and connectivity trends.

### Privacy Considerations

Vehicle usage data is inherently sensitive, making privacy a major concern in the research. Both datasets utilize pseudonymized identifiers for vehicles, ensuring that individual records cannot be traced back to specific vehicles or customers. Additionally, the data contains no detailed location information beyond the country. Due to these measures, both datasets are classified as Cluster 1 under BMW's internal legal framework, designating their use as relatively uncritical. However, obtaining access to the data still required extensive training and interviews to ensure compliance with privacy guidelines. Before any data was downloaded, vehicle identifiers were completely removed to eliminate any possibility of tracing individual vehicles. The analysis focused solely on fleet-wide trends, avoiding any tracking of individual vehicle behavior. Accordingly, the prioritization of the vehicles performed as part of the method of Fig. 1a may be done in accordance with relevant legal requirements, e.g., in accordance with the relevant privacy regulations.

### Prediction Tasks and Models

The simulation requires the prediction of customer behavior whenever direct or indirect user interaction is involved in the update. For instance, the time instants when customers accept updates are predicted, or the periods during which vehicles are in active use, therefore downloading artifacts. This presents several prediction tasks which may be implemented in order to achieve realistic results. This section will introduce all tasks that can be used by the simulation and detail the models employed for their implementation. As these models are useful for both the simulation and strategic performance optimization, the proposed concept aims to provide a comprehensive reference for future implementation efforts.

### Basic Concepts and Integration of Prediction Models

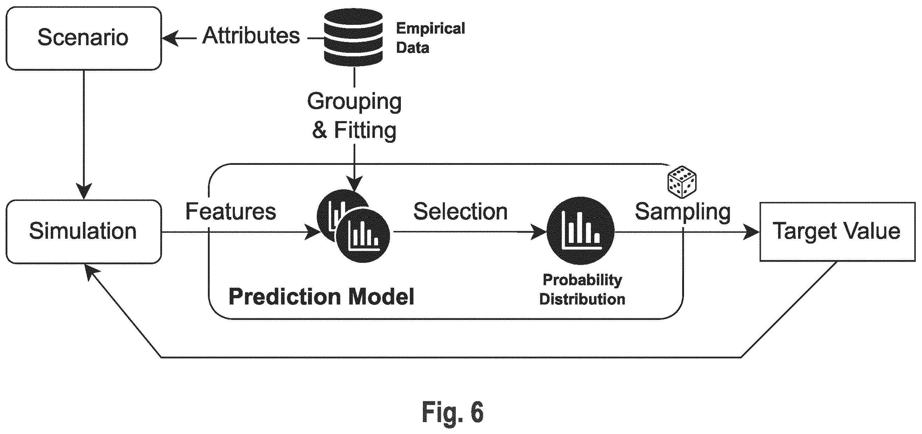

To maintain a clear separation of concerns, each prediction task used by the simulation was implemented as one distinct model. These models are decoupled from the simulation via the use of individual interfaces. This approach enables to develop, improve, and validate each model in isolation, leading to decreased complexity and improved maintainability. Fig. 6 shows the structure and embedding of prediction models. Fig. 6 shows the generic structure of prediction models, as well as their integration with other components of the simulation-framework.

Integration: Each model implements exactly one prediction task and follows a generic structure in terms of inputs and outputs. Every model takes in features that are known beforehand, such as a vehicle's drivetrain or the current time. The exact features used will be described in the following, as the identification and association of specific features can be practically and conceptually decoupled from their use in models. The result of each prediction is one definite value out of a set of possible target values that the simulation can use to proceed with calculations. These target variables can be either discrete, such as result status, or continuous, such as durations. The present disclosure works with discrete features, either because they are discrete by nature or quantized into bins.

Structure: Internally, models work by splitting empirical records into groups based on the values of features they exhibit, and then fitting probability distributions to target variables in each group. The definite result values are then randomly generated from these distributions. This approach reflects the inherent randomness of customer behavior. For example, while certain patterns, such as for the update activation, may heavily favor specific durations or times of the week, the exact instant of one specific user pressing the button to activate the update remains fundamentally random at a practical level of abstraction. However, the law of large numbers ensures that this randomness averages out over many predictions, effectively reproducing the original probability distributions in large aggregate. This principle implies that overall, the models deliver reliable outcomes, even when individual invocations result in random values. This approach can be effectively characterized by two distinct phases: Fitting: In the initial preprocessing phase, empirical data is analyzed and divided into groups. Then, probability distributions are fitted to the target variables within each group, and Sampling: During the simulation runtime, a respective distribution is selected and sampled to generate a specific value. Given the large number of model invocations that are required by the simulation, the sampling process must be designed to be computationally efficient. In contrast, the fitting phase imposes minimal restrictions on computational runtime, allowing for thorough data analysis.

The next sections describe each category of prediction model, aligned with the simulation's abstraction: triggers, actions, and phases. Particular attention is given to the download phase, as it involves predicting the mobile network operations (MNO) throughput consumption for cellular downloads, which is identified as one primary bottleneck.

### Prediction of Customer Searches

Customers can manually search for updates at any time. The simulation models this by scheduling events that are executed whenever a customer initiates a search. The central task of this model is to determine the exact time instants when each vehicle triggers a search. This results in a list of time instants for every vehicle.

The approach can be split into two key concepts, represented by separate distributions. The first determines how often users search for updates. This has shown to have a correlation with vehicle features like the drivetrain or country. The second identifies when users tend to perform these searches, which has shown to be largely independent of vehicle features but closely linked to the vehicle's time zone, as the current local time is the most significant factor.

Fitting: To fit the how often distribution, the average monthly searches are calculated for each vehicle. This is done by dividing the total number of recorded searches for a vehicle by the total months that vehicle has been represented in the database. Next, these averages are grouped by vehicle features, resulting in a distribution of average monthly searches for each group. A final step could involve fitting a probability distribution to this data, which could be sampled at simulation runtime. However, since this particular model does not require such a level of differentiation, the data was aggregated using an average. The resulting data structure is a map, which assigns each feature group a value of average monthly searches for vehicles in that group.

As for the when distribution, all records of search requests are grouped by the time zone they occurred in. The time instants of these searches are converted into cyclical 15-minute timeslots within a week. For each of these 672 time slots, the number of searches that occurred during that slot were counted and the resulting time series was normalized to a value range of zero to one. The resulting data structure presents one time series of relative frequencies for customer searches for every time zone.

Sampling: After these distributions have been fitted, serialized, and persisted during preprocessing, the model can be invoked to sample values. First, the number of searches each vehicle will perform was sampled during the simulation's timeframe based on the how often distribution using probabilistic rounding. Second, these searches are distributed across the timeframe according to the when distribution to obtain realistic placements. This is achieved by performing a softmax on the distribution of relative frequency values over the specified timeframe, using accumulative sampling to decide on a 15-minute timeslot, and finally sampling a random value within that timeslot.

This approach ensures that both the frequency of searches, as well as their timing, reflect the records in empirical data sources.

### Prediction of Action Executions

As previously described, actions are tasks that are executed on backend systems to complete an update. Most actions follow a predictable course with consistent execution times, as they rely solely on controlled backend systems, such as database servers. A model of execution for these actions does not require detailed analysis of empirical data. However, some actions necessitate vehicle interaction. For example, creating the RSU manifest requires the vehicle to provide information about its current software versions, which is only possible when the vehicle is in a wakable state. Similarly, the provisioning action requires the vehicle to be online.

Although actions requiring vehicle interaction are relatively rare, a generalization of the concept of vehicle state requirements for actions is proposed. This not only enhances the accuracy of modeling these actions but also ensures the framework remains adaptable for future expansions. To achieve this, vehicle connectivity states are abstracted into three categories: Offline, Wakable, and Online. An action can only be executed when the vehicle is in the state required by the action. Thus, the core task of this prediction is to identify the current connectivity level of any vehicle, given a time instant. This requires fitting distributions that describe vehicle states over time.

Fitting: To fit the required distributions, records of historical vehicle connectivity were analyzed, where each row describes the state of a vehicle for a specific hour. Each hour was converted into a cyclical representation with 167 one-hour slots corresponding to a week. Records were then grouped by their time zone and local timeslot, and the probability of being in the required state was calculated. This was done by dividing the number of rows showing the required state by the total number of rows in the group. The result is a cyclic time series for each combination of time zone and vehicle state, encoding the probability of a vehicle being in a specific state at a given time. As these timeslots represent periods of one full hour, linear interpretation was employed between slots to improve accuracy.

Sampling: To determine the time windows for action execution, these distributions were sampled by performing biased Bernoulli trials. Given the time zone of a vehicle and the current simulation time, the corresponding probability value from the time series was used to obtain a probability value. An action can be executed during that hour if that state matches the action's requirement.

### Prediction of Phase Courses

As described in earlier chapters, phases are defined as time frames of vehicle activity, which play a major role in the update process. They dominate the duration of updates, are tightly tied to customer behavior, and are the stages most prone to errors. Therefore, significant effort has been put into making their prediction as accurate as possible.

Since phases like activation preconditions (CAP) or the local activation of the update generally do not involve shared resource consumption, the simulation only requires two key predictions for each phase: the duration until completion and the result status. The result status indicates whether the phase completes successfully or ends with a specific error type (e.g., external error or initialization error). Both of these predictions are modeled independently and will be described in the following sections.

### Prediction of Phase Results

To predict the result status, a straightforward approach was employed that leverages one categorical distribution for each feature group.

Fitting for the Result Status: To fit the categorical distributions, records of past update processes in the RSU dataset were analyzed. First, the records for each phase are assigned a set of feature columns that will be described in the following chapters. Then examples are grouped by feature values. For each group, the categorical probabilities of different result statuses are accumulated. This results in one categorical distribution over the result status for any feature group, which can be stored in a map data structure.

Sampling of the Result Status: To sample a result status for a particular vehicle and a particular phase, the categorical distribution for the feature values of that vehicle was selected. A specific result status was then sampled based on the probabilities that have been fitted during preprocessing.

### Prediction of Phase Durations

Prediction of the phase duration is more complex. When plotting the cumulative distribution function of the empirical distribution of duration values, a mixture of a gamma-like shape (common for waiting times) and a sinusoidal pattern with peaks at 24-hour intervals was observed. These peaks likely result from customer tendencies to start and end phases during specific daily periods as a result of rush hour usage patterns. This indicates that durations which are closer to multiples of 24 hours tend to be more likely. For example, the check activation preconditions (CAP) phase will only end when customers accept the update upon exiting their vehicle. Similarly, downloads will only progress (and thus start and end) when vehicles are in active use. If customers do not activate an update after getting home from work, they are much more likely to perform the activation upon ending their next commute tomorrow than they are to activate during the night.

The underlying distribution of the empirical records of phase durations is thus expected to be a mixture of two components, each having different influencing factors: The gamma-like distribution defines the broad shape of the probability density. This represents the overall likelihood of phases to end after or before some specific duration. This likelihood is expected to be influenced by factors like the update size and connection speeds for downloads or the willingness to update for the CAP phase. The sinusoidal component results from the cyclical nature of phase progression, caused by rush hour usage patterns. This encodes the tendency of phases to end at specific times. It was found that these times are mainly influenced by the current local time within the vehicle's time zone, regardless of other attributes. From this, it is concluded that the overall duration of a phase, given a specific start time, is influenced by both the probability of ending after a certain duration and the probability of ending at a specific time. To achieve realistic results, it is required to account for both factors.

Fitting of Duration Distributions Again, separate distributions are fitted for each feature group by first associating empirical records with their corresponding features and subsequently grouping the data based on these features. This process generates a set of duration examples for any feature group, each giving rise to one continuous empirical distribution per group.

To independently manage the two aforementioned components of these distributions, the gamma component is first isolated. This is achieved by shifting all individual duration values randomly within a 24-hour window. This smoothes out the sinusoidal influence while maintaining the overall shape of the empirical density functions very precisely. After smoothing, a probability distribution is fitted to the empirical data in order to reduce memory usage during runtime. While gamma, log-normal, and exponential distributions have shown to introduce considerable deviations, a t-Digest representation proved optimal. This drastically lowers memory usage while preserving accuracy. For later reference, these resulting distributions are denoted as duration distributions.

Fitting of End-Time Distributions: The sinusoidal component, which captures the likelihood of phase end-times, is modeled separately. Again, analysis is based on the same historical data. However, rather than focusing on phase durations, the emphasis is placed on the specific end-times of these phases.

First, end-timestamps are converted into 15-minute timeslots within a cyclical week, adjusted to local time. The data is then grouped by time zone and timeslot, and the number of phases ending within each timeslot is counted. The resulting time series for each time zone is then normalized by dividing each value by the maximum value in the series, resulting in a set of cyclical time series of relative frequencies, with values ranging from zero to one. These time series are denoted as end-time distributions.

Sampling of Phase Durations: To sample values for the duration of phases, a plausible window for possible end-times is first derived. This window begins at the predetermined start-time of the phase and spans the maximum duration that has been observed in the data. It is assumed that the end-time of the phase must fall into this window. In the next step, each 15-minute timeslot within the given window is assigned a relative likelihood of the phase ending during that slot. For this, data from both sources is combined: the duration and end-time distributions. This starts by probing the end-time distributions for every timeslot, producing a new time series consisting of relative likelihoods of ending during that slot. Next, for each slot, the duration distribution function is queried to get the likelihood of ending after the corresponding duration. These two values are then combined using a mixture function. Although various functions were considered, simple multiplication proved to yield the best results, as it naturally weighs both factors: Timeslots are unlikely to be chosen when they fall into night times or result in phase durations that are overall less likely. Conversely, they are more likely to be chosen when both the end-time and duration are probable.

The resulting combined time series is further normalized using a softmax function to ensure all values sum to one. From this normalized time series, accumulative sampling was applied to select a specific 15-minute slot during which the phase is predicted to end. Finally, a random time instant is chosen within that slot, marking the end-time of the phase, which can be used to derive the duration.

Validation: Given the complexity of the described process, additional effort was dedicated to validating the underlying assumptions. Special attention was paid to ensuring that preprocessing steps, such as smoothing and fitting the t-Digest, did not introduce inaccuracies into the distributions. Furthermore, the entire approach was validated by sampling 10,000 values and comparing the resulting distribution to the original empirical distribution derived from the raw data. A visual inspection of both distributions revealed strong alignment, with minimal to no observable deviation.

### Prediction of the Download Phase

The download phase is special in the sense that it comprises the largest consumption of network resources. In particular, it may consume mobile network operations (MNO) throughput, which has been identified as one of two primary bottlenecks during the qualitative analysis. Therefore, it does not suffice to only predict the final result and duration of this phase. In addition, this prediction model is tasked to predict when exactly MNO throughput is consumed.

### Modeling of the Download Phase Prediction

At the time of writing, customers are able to download RSU chunks using any combination of two channels, resulting in four possible values for the used channel: Android for Auto (A4A) downloads are performed using the MyBMW app. As this will use the cellular connection or WiFi network of the smartphone, which is funded by the customer, AAD downloads do not consume MNO throughput. Over-the-Air (OTA) downloads are performed over the built-in telematics unit of the vehicle, with data transfer being funded by BMW. These downloads will consume MNO throughput. Mixed: There is the possibility of using a combination of both channels for a single download. This can happen because the MyBMW app will download and transfer chunks over multiple sessions, while other chunks are downloaded over the cellular network. None: Finally, it is possible for vehicles to not start the download at all, but time out instead. While this is unlikely for allowances that include OTA, it is rather common when downloads are restricted to the MyBMW app.

The download is in itself a phase in the sense that it has an overall result status and a duration that needs to be predicted. However, internally it consists of two delegate phases, differentiating the stages during which a vehicle is waiting for the download and actively downloading. This distinction is relevant to further narrow down the window of time during which vehicles perform OTA downloads, therefore consuming MNO throughput. Two regular, delegate prediction models are used to predict both the result status and duration of each included phase. The inner workings of these models have already been detailed in a previous section. In addition, two other delegate models are used to predict the channel that is used for the download and the ratio of bytes that are transferred over the air. These required predictions are outlined in the following.

### Prediction of the Download Channel

The download allowance for any vehicle at any time is defined by backend systems and can therefore be strategically planned and controlled by rollout strategies. However, the actual channel that is used for the download is lastly decided by the customer. As the channel that is used heavily influences the course and resource consumption of the download, a model was used to predict which channel is used based on the provided download allowance. For this purpose, a set of categorical distributions over a derived attribute were used, which is denoted as the used channel.

Fitting: The RSU dataset includes data on how many bytes were transferred over any channel for each past update process. This information is used to derive and attach a column used channel with possible values: A4A, OTA, Mixed and None. As differences in behavior are expected across different groups of customers and vehicles, some relevant features were additionally attached to the records. Notably, these features include the download allowance that had been assigned to the process. It is then grouped by all of these features, giving us examples of the channels that were used for any feature group. Lastly, for each of these feature groups, one categorical distribution was fitted over the used channel attribute.

Sampling: To sample a value for a particular vehicle, the categorical distribution that corresponds to the given feature values was first selected, including the download allowance. A random value was sampled from this distribution to receive the channel this vehicle is expected to use for the download.

### Prediction of the OTA Transfer Ratio

Downloads can be performed using a mixture of both the A4A and OTA channels. For these mixed downloads, the update chunks are partially transferred over the cellular network and the MyBMW app. Therefore, to calculate the expected load on the MNO throughput, the ratio of bytes that are transferred over MNO when a mixture of channels is used is predicted. To derive values for this OTA transfer ratio, the same method of grouping over feature values was used that was described in the last section. However, instead of fitting categorical distributions, a single value per feature group was derived by dividing the number of bytes that were transferred OTA by the total number of bytes that were transferred and then averaging these values for all groups. This results in a map structure, which associates the average OTA Transfer ratio to any feature group.

### Prediction of Download Throughput

Prediction of the download throughput mainly involves the use of several delegate models that were already established in previous sections: Prediction of the Download Channel, Prediction of OTA Transfer Ratio, A model to predict vehicle activity, and two phase prediction models for the sequence of waiting and performing the download. Given all of these models, the following steps are used to predict the distribution of MNO throughput consumption over time:
Used channel: The channel that is used was first sampled, given the current download allowance by invoking the corresponding delegate prediction model. Time windows: The first phase prediction model was then sampled to get the time instant when the download is started. This time is then used as an input for the second delegate prediction model to sample the end-time of the download. The results of these predictions present us with a time frame during which the vehicle is expected to perform and complete the download. If instead either of the delegate predictions present an error, the download phase, as a whole, will be terminated with the first error code that was encountered. Transfer Size: Given the channel that is used for the download, the size of the artifact and the OTA Transfer Ratio, the total amount of bytes that are downloaded over OTA during the time window is calculated. Throughput Over Time: To determine throughput, a simplified approach of dividing the transfer size by the download duration does not suffice, as it assumes continuous downloading at a fixed rate. This does not reflect reality, as downloads only occur when vehicles are actively driven. To account for this, the vehicle activity distribution is sampled at regular intervals throughout the download window. The sampled values are normalized using softmax to ensure they sum to one, representing the distribution of bytes downloaded across the time slots. These ratios are then multiplied by the total update size to estimate the bytes downloaded in each slot. Dividing these values by the slot size yields the expected throughput for each time slot. The resulting time series, containing the throughput predictions per slot, is accumulated by the simulation to aggregate the utilization of MNO throughput across multiple update processes.

### Feature Selection and Association

In previous sections, the generic term feature was used to describe attributes that are known in advance of predictions and used to narrow down the distributions of target values. This chapter focuses on the specific features identified and constructed for this study. First, the rationale for selecting these features is outlined and then a methodology for associating them with the individual prediction tasks that were discussed in the previous section is proposed.

### Introduction of Relevant Features

Several features were identified that can be attributed to empirical records of past update processes and vehicle activity, based on domain knowledge and data availability. These attributes are used to group examples of empirical records and fit probability distributions to each group. Features are identified that correlate with these distributions and produce meaningful differences across different feature groups. These differences can be utilized to make predictions more differentiated and to provide leveraging points for performance optimization. Therefore, the identification of relevant features is a major concern for the research task. This section will introduce, explain, and categorize all features that were identified.

### Explicit Vehicle Features

This section outlines several features that can be directly attributed to vehicles during an update without the need for much additional derivation logic.

Country: The RSU dataset explicitly references the country in which an update was performed. It is anticipated that the geographical location of vehicles will impact both the download and check activation preconditions (CAP) phases due to variations in network availability, connection speeds, and cultural factors that may influence customers' willingness to manually download and accept updates. While a more granular differentiation could offer additional insights, privacy concerns limit this possibility.

Time zone: Vehicles are often used for commuting to work, and work schedules typically follow daily and weekly patterns that are influenced by time zones. As a result, time zones are the primary predictor of vehicle activity, connectivity, and usage patterns. While there is a strong connection between countries and their respective time zones, it is important to note that this relationship is not always one-to-one. For countries with a direct one-to-one mapping to time zones, the corresponding time zone can be assigned. In cases where such a mapping does not exist, the usage patterns is adjusted - derived from consolidated data across all time zones - by applying the respective time zone offset. This approach has shown to work reliably, as vehicle activity patterns are very similar when only considering local time.

Drivetrain: The drivetrain is the system in a vehicle responsible for transmitting power from the engine or motor to the wheels. This serves as a significant and distinguishing characteristic of vehicles in terms of their technical attributes and target demographic. There are four possible types of drivetrains for vehicles sold by BMW: CONV: Conventional vehicles, also known as internal combustion engine (ICE) vehicles, offer no additional electric propulsion. MHEV: Mild-Hybrid Electric Vehicles use electric motors to support the conventional engine. Batteries are only charged through recuperation or driving. PHEV: Plug-in Hybrid Electric Vehicles have an additional electric motor that can be separately charged. BEV: Battery Electric Vehicles (BEVs) rely solely on electricity for propulsion and do not have a conventional combustion engine. The demographic differences between the owners of vehicles with certain drivetrains are expected to influence their willingness to download and accept updates. Additionally, the error rates associated with certain drivetrains are expected to be considerably higher, particularly due to known issues with older batteries that can cause update processes to be permanently canceled during the check activation preconditions (CAP) phase.

Automatic Updates: All remote software updates require customer consent prior to their activation. Usually, customers are asked for confirmation during the CAP phase. However, as part of the new consolidated update system, it is planned to implement an account setting that allows users to activate automatic updates for their vehicle. This will decrease the duration of the CAP phase considerably, as user interaction is no longer required. At the time of writing, there is no empirical data on the ratio and distribution of vehicles that have automatic updates enabled. Thus, for now, this feature cannot be utilized by prediction models in a generic sense.

### Features Derived from Usage Patterns

In addition to the explicit features that were described in the previous section, there are properties that can be derived from the usage behavior.

Usage Frequency: The usage frequency groups vehicles into six evenly sized tiers based on their average daily activity: low-low, low-high, mid-low, mid-high, high-low, and high-high. Each tier is defined by a certain percentile range in steps of 16.66%. For example, vehicles in the low-low tier make up the bottom 16.66% in terms of average daily activity. The daily activity is derived from the average number of daily last state call messages with state driving that were sent by vehicles as part of the periodic reports which are consolidated and archived in the vehicle state dataset. The usage frequency is expected to impact the durations of downloads over the cellular network as downloads are automatically performed while the vehicle is being driven. Smaller trends are expected in the CAP durations as vehicles that are driven infrequently might give fewer opportunities to update.

Customer Search Tier: Vehicles were split into two groups (inquisitive and uninquisitive), based on whether any manual search requests have been recorded for the vehicle. The inquisitive vehicles were then further split into three tiers (low, mid, high) based on the average amount of monthly searches made for that vehicle. As the inquisitive group accounts for about 10% of vehicles, the high tier contains only the top 3.33% of vehicles regarding their average monthly searches. The search tier is expected to correlate with the durations of the CAP phase, as customers who are actively looking for updates should be more willing to accept them when given the opportunity. It is also expected to see an effect on the download phase, as customers who actively search for updates might be more willing to utilize app downloads.

App Usage Tier: Following the approach for deriving the customer search tier, vehicles were split into two groups: app-users and app-refusers. Vehicles got assigned to the app-users group if there were any records of past downloads over the MyBMW app. The app-users were then further split into one of three evenly sized tiers (low, mid, and high) based on the average ratio of bytes that were downloaded over the MyBMW app. A higher affinity to technology is expected, that is expressed by utilizing app downloads. This could lead to an effect on the durations of the CAP phase, as customers who are more interested in technological advancements might be more prone to update early.

### External Features

While the previously discussed features are directly associated with vehicles and their owners, this section introduces additional features representing external factors.

Download Allowance: The download allowance can be used by backend systems to restrict usage of channels during the download of RSU chunks. Thus it directly determines the set of channels that can be used for the download.

Used Download Channel: This feature describes the actual channel that is used for the download of RSU chunks. Possible values are: A4A, OTA, Mixed, or None. While the allowance restricts the use of certain channels, the decision on which channel is used is up to the customer. Therefore, the used channel is itself the target of a prediction model but can be used as a feature for following predictions.

Update Size: The update size refers to the total amount of bytes that make up the RSU chunks. For use as a discrete feature, sizes were quantized by rounding to the nearest full gigabyte.

Time: The current local time is the most important predictor of vehicle activity, as that shows very strong daily and weekly patterns. To use time as a discrete feature, it is represented in terms of slots that make up cyclical intervals of one week. Future work may expand on this by additionally incorporating yearly patterns.

### Association of Features with Prediction Tasks

One overarching approach employed for prediction models is to group examples and fit probability distributions to each group. Examples are separated based on the values of features they exhibit. Thus, each group solely consists of examples with identical feature values. This approach builds on the premise that meaningful differences between the distributions of groups enhance the predictions by making them more precise and differentiated. Additionally, these inter-group differences can later be leveraged for prioritization and optimization in strategy development. The incorporation of more features generally results in more groups, which improves the precision and differentiation of predictions. However, this also leads to a reduction of examples per group. Once data becomes too fragmented across a vast number of groups, it is no longer possible to reliably fit probability distributions. This necessitates an approach for the selection and association of feature subsets to each individual prediction task.

### Description of the Feature Association Algorithm

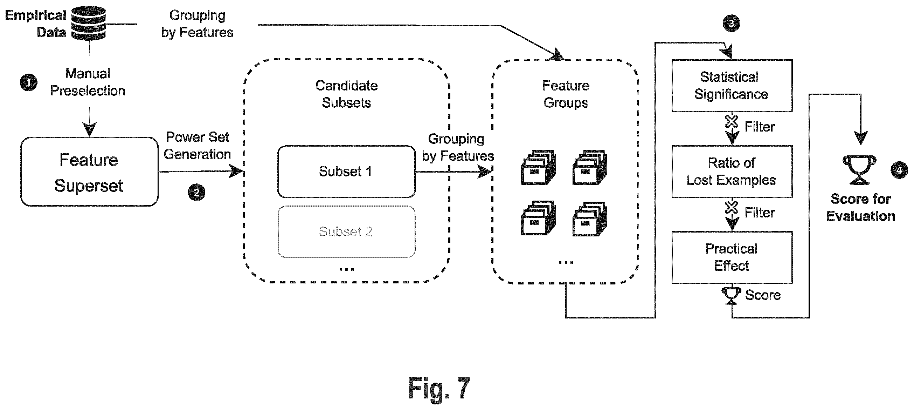

Feature selection is a well-studied topic, with numerous approaches discussed in the literature. In this section, a four-step approach for associating features with prediction tasks is presented. Fig. 7 presents an overview of the feature selection process.

1. Manual Feature Selection: The process starts by manually selecting features that are expected to influence the target distributions. This preselection ensures that only relevant features are considered in the subsequent steps. For example, the update size is rather unlikely to have an impact on the duration of the check activation preparations phase. 2. Candidate Generation: From the manually selected features, all possible subsets are computed. Each of these subsets represents a potential candidate for evaluation. 3. Candidate Evaluation: Each candidate subset is used to group the data by feature values and then evaluated against three criteria: Statistical Significance: It is tested whether the observed differences in distributions between groups could be explained by pure chance, using a Kruskal-Wallis test. It should be noted that the large sample sizes typically result in statistical significance for all candidates, except those that were already discarded during manual preselection. This check is included for confirmation to ensure robustness. Practical Effect Size: A measure of practical effect size is used to quantify the magnitude of differences between distributions. A detailed description of these calculations will be provided in the following section. Ratio of Lost Examples: Splitting data based on a feature set can result in groups with too few examples to fit distributions reliably. These examples are considered to be lost, as they do not contribute to the distribution of any group. If, during sampling, a feature combination comes up that does not have a corresponding distribution, a fallback must be used instead, which is fitted on all examples. As this loses precision, the ratio of lost examples, which result from the usage of any candidate subset, is considered. 4. Candidate Filtering and Selection: Any candidate subset where the differences between groups can be explained by chance or where more than 5% of examples are lost is discarded. The remaining candidates are ranked based on their practical effect size, with higher effect sizes indicating better candidates.

This structured evaluation ensures that the selection of feature subsets balances statistical validity, practical relevance, and data availability. The process is currently semi-automatic due to the need for manual preselection; however, future work may be aimed to fully automate it. This would facilitate the seamless inclusion of additional features and enable recalculations at regular intervals, accounting for potential changes in the effect of features on targets over time.

### Effect Size Calculation

The practical effect size is used as the central metric for quantifying the differences between groups and therefore evaluating the quality of candidate feature sets. The method of calculation depends on the type of target variable.

Discrete Target Variables: To assess the practical effect size for discrete target variables, such as result status or used download channel, the following method is employed:
1. Consolidate Target Values: First, target values are consolidated that are not of primary interest. In an error distribution, all possible error codes are grouped into a single category, distinguishing only between success and error.
2. Examine Categorical Distributions: The categorical distribution of target values are analyzed within each group and for the combined group of all examples. These distributions assign a probability to each possible target value (e.g., success or error).
3. Calculate Differences in Probabilities: For each group i and each target value v, the difference between the probability *Pi* (*v*) in group *i* and the probability Poverall(v) in the combined group is calculated: ${Δ}_{i , ν} = \left|{P}_{i}\left(ν\right)-{P}_{overall}\left(ν\right)\right|$
4. Average Differences Across Groups and Values: The average difference is calculated across all groups and all target values. The practical effect size is given by: $Effect Size = \frac{1}{n ⋅ m} {\sum }_{i = 1}^{n} {\sum }_{ν = 1}^{m} {Δ}_{i , ν} ,$ where *n* is the number of groups, m is the number of distinct target values, and Δ*i*,*v* is the absolute difference for group i and target value v.

Continuous Target Variables: To assess the practical effect size for continuous target variables, such as the duration of phases, the following method is employed:
1. Examine Empirical Distributions: For each group *i* under analysis, as well as for the combined group of all examples, the individual data points are examined, each forming a continuous empirical distribution. These distributions can be represented as a set of empirical density functions *EDFi* (*x*)*.*
2. Define the Range of Possible Values: To ensure uniform comparison, the smallest and largest observed values are identified across all groups. This range [*x*min, *x*max] serves as the domain of possible target values.
3. Calculate Ratios Under the EDF Curve: For each group, the proportion of the range [xmin, xmax] that falls under the EDF curve is computed. Mathematically, this ratio for a given group *i* can be expressed as: ${R}_{i} = \frac{{\int }_{{x}_{∗ min}}^{{x}_{∗ max}} {EDF}_{i} \left(x\right) dx}{{x}_{∗ max} - {x}_{∗ min}} ,$ where *EDFi* (*x*) is the cumulative distribution function of group *i,* and *Ri* ∈ [0, 1].
4. Compute Differences with the Overall Distribution: Let Roverall denote the ratio under the EDF curve for the combined group. For each group *i*, the absolute difference between its ratio *Ri* and *R*overall is calculated: ${Δ}_{i} = \left|{R}_{i}-{R}_{overall}\right| .$
5. Average Differences Across Groups: The practical effect size is then determined as the average of these differences across the total number of n groups: $Effect Size = \frac{1}{n} {\sum }_{i = 1}^{n} {Δ}_{i}$

Interpretation: For both continuous and discrete target values, the resulting effect size is a real number within the interval [0, 0.5], where a value of 0 indicates no difference between the group distributions and the overall distribution, and a value of 0.5 represents the maximum difference that is possible. This measure quantifies the divergence of individual group distributions from the overall distribution, offering an assessment of the practical significance of grouping by any candidate feature set.

### Development and Evaluation of Rollout Strategies

In the previous two chapters, the framework that was employed for the development and evaluation of rollout strategies was established. This chapter delves into the specific strategies implemented.

An introduction of the absolute baseline strategy is first presented, which operates without any real scheduling or planning, briefly exploriung two basic strategies to introduce relevant concepts. The primary focus, however, lies on detailing the ADAPT (Adaptive Allocation and Prioritization while Triggering) strategy, which proved to be the most effective, as it integrates elements from all other approaches that were explored.

### The Baseline Strategy

To establish a foundation for evaluating potential improvements, a baseline strategy devoid of dedicated logic was developed. This baseline serves as a reference point for future comparisons and represents the current state of the system as it would function if deployed without additional refinements or optimizations.

The baseline strategy consists of an All At Once (AAO) planning component that is combined with First in First out (FIFO) scheduling. The AAO planning component schedules all updates immediately at the start instant of the rollout using a random order. There are no efforts to balance resource usage while planning apart from a single parameter to control the delay after which OTA downloads are allowed. This allowance will immediately apply to all vehicles that are involved in the RSU campaign. The FIFO scheduling component will immediately send out any actions for execution to their corresponding channel. The order in which actions are executed is solely based on the order in which they were queued. This behavior mimics a system without any real planning or scheduling logic and thus represents the as-is state. This strategy is expected to have subpar performance, as no effort is being made to prioritize vehicles, consider manual search requests, or preserve MNO throughput.

### Basic Strategies

This section outlines two noteworthy planning strategies explored during development. While the ADAPT strategy, which will be discussed in the next chapter, demonstrated superior results and will serve as the primary focus for the final evaluation, these basic strategies are presented here as they introduce key concepts that the ADAPT strategy builds upon.

### Prioritization of Automatic Updates

Apart from limits on cellular throughput, the primary limitation in managing many update processes in parallel lies in the capacity of backend systems to execute actions. Currently, this limitation is primarily due to the restricted capacity of the RSU hubs to generate manifests, but in general, this restriction will always remain true unless all updates can be handled in parallel. As a result, rollout timeliness optimization can be framed as a queue sorting problem, where the goal is to achieve optimal time performance by prioritizing vehicles based on their expected update completion times.

The most noteworthy feature to use for prioritization is the auto update setting. Vehicles with enabled auto updates typically complete updates faster, as explicit customer consent is not required. The activation of this setting is expected to express interest in receiving updates promptly. This makes the auto updates setting an intuitive starting point for prioritization. However, while straightforward to implement, relying solely on this setting is suboptimal, as it represents only one of many potential features to sort by. Moreover, this approach does not account for MNO throughput preservation or handling of customer searches.

Despite these limitations, the concept of prioritizing queued vehicles holds significant promise for improving rollout timeliness. By incorporating additional features and constraints into the prioritization process, it is possible to further enhance the time performance of update rollouts.

### Staggering by Time zone

Update processes are significantly more likely to progress during peak times. This is true for downloads, which only progress while vehicles are in use, and for the manual activation of updates. Conversely, during nighttime hours, updates are less likely to advance, resulting in idle periods. During these times, updates may be initialized, and RSU manifests generated, but little progress is made, resulting in wasted time performance. To address this, updates should ideally be initiated so that they are ready for download at the start of the next rush hour. To explore this concept, usage patterns were analyzed for each time zone. By creating time series data that captures the relative frequencies of vehicle activity, morning and evening rush hours can be identified using a peak detection algorithm. The algorithm smooths the time series and detects the starting times of each rush hour. Vehicles in the time zone closest to the next peak time are then prioritized for updates.

However, this approach is also limited. It does not consider other vehicle attributes or factors within the same time zone, nor does it weigh the influence of rush hour delta times against vehicle features. Despite these shortcomings, the concept of prioritizing vehicles based on their delta time to rush hours remains an interesting starting point to reduce idle times and improve overall time efficiency.

### The ADAPT Strategy

As discussed in previous sections, the as-is baseline strategy is expected to be insufficient in terms of preservation of MNO throughput and response times to manual search requests. This strategy is expected to have subpar performance in terms of rollout timeliness as there are no efforts being made to prioritize vehicles. To address these issues, several strategies were explored over the course of the practical work. The last section outlined two approaches which, while easy to implement, still leave potential for improvement.

In this chapter, e a more dedicated strategy to preserve resources while increasing rollout time performance is introduced. The strategy comprises a dedicated planning component which uses a custom algorithm for adaptive assignment and prioritization while triggering (ADAPT) in combination with a simple scheduling component that prioritizes actions which are part of processes that are triggered by customer searches (PCS). The following sections will focus on the functionality of the planning component.

### Overview of the ADAPT Algorithm

ADAPT is a planning algorithm, designed to time the initiation of update processes and download allowances in a way that optimizes rollout performance across all three dimensions identified as primary goals. Download allowances are managed to ensure mobile network operations (MNO) throughput always stays in a specified corridor. The expected base load, that is produced by manual searches, is considered to preserve the required backend capacity, and vehicles are prioritized by the duration which updates are expected to take in order to optimize the time performance.

An overview of the full algorithm is provided, in a simplified form, as pseudo-code in Fig. 8. Fig. 8 shows a pseudocode representation of the ADAPT algorithm. While the actual implementation is written in Java, the pseudo-code follows Ruby syntax for better readability. ADAPT encompasses several phases and concepts, which will be detailed in subsequent chapters.

Initialization: The algorithm starts by predicting a distribution of manual search requests over the entirety of the planning duration. Notably, said planning duration is longer than the rollout target duration to account for updates which supersede the targeted end-time. The customer searches prediction model is employed for this purpose. The result of this prediction is a list of timestamps at which customer searches are expected. Based on these timestamps, a base load for the RSU hub is calculated, given these requests were handled immediately. This distribution is stored as a time series for later reference.

In the next step, a set of queues is initialized for any possible combination of feature values, that are exhibited by the vehicles which are involved in the rollout. Each queue gets filled with all vehicles that have the corresponding feature values, resulting in queues that hold vehicles which are practically identical from a modeling standpoint. The current time is initialized to the start of the rollout and the current download allowance is set to green, meaning that all updates, which will be triggered by ADAPT after this point, will be given allowance for OTA downloads.

Main Loops: The algorithm now enters the first loop. At this point, queues are prioritized using a score, which is calculated via a function over the current time, download allowance, and set of features which are represented in vehicles of each queue. Vehicles that are expected to finish the update earlier, given these parameters, are assigned a higher score and will be triggered first. This score calculation will be detailed in a following section. In a second loop, the algorithm selects one vehicle out of the best queue. It then performs two checks to ensure that both the RSU and MNO capacity are sufficient to initiate the update for this vehicle, given the current time and download allowance. If these checks succeed, the update initiation will be planned at the current time. The vehicle will then be removed from its queue, and the expected load that is produced by the update process is accumulated. This process continues until all vehicles are assigned a trigger time.

Gradual OTA Allowance: ADAPT employs a mechanism to restrict OTA downloads for individual vehicles when MNO throughput is predicted to run low. The exact method will be detailed in the following section. To ensure optimal update coverage, vehicles that are initially restricted must still receive OTA allowances at some point. This is achieved through a gradual allowance phase, during which OTA permissions are granted based on continuous estimations of expected MNO throughput. The process involves repeatedly evaluating whether the current throughput utilization can accommodate the addition of an additional OTA download for a specific vehicle. If the throughput is deemed sufficient, the vehicle is granted OTA permission. If not, the permission time is deferred to a later period when sufficient throughput is anticipated.

### Resource Preservation in ADAPT

ADAPT ensures the preservation of both critical resources that are identified as primary bottlenecks. For over-the-air downloads, allowances are controlled on a per-vehicle basis to maintain the mobile network operations throughput within a specified range. Additionally, the initialization of updates is throttled to ensure sufficient capacity is preserved to handle the expected volume of manual search requests.

Preservation of RSU Capacity: ADAPT keeps track of the load generated by vehicles that are scheduled for updates. This load is added to the predicted load from manual search requests to calculate the total load on the RSU Hub at the current time. An update is only initiated when the RSU Hub has sufficient capacity to generate the required manifest. If adequate capacity is unavailable, the system advances the current time to the next instant when capacity becomes available. This time advancement invalidates previously calculated scores, as they are based on the earlier instant. Consequently, the algorithm exits the second loop and recalculates the scores to reflect the updated conditions. This approach ensures that RSU hubs maintain the required capacity to handle manual search requests, while only progressing time in the smallest possible increments, resulting in minimal to no idle periods.

Preservation of MNO Throughput: If the RSU capacity is sufficient, the algorithm calculates the expected MNO throughput load, given the current time, download allowance, and vehicle features. A combination of phase prediction models that were described in a previous section are used for this purpose. This results in a time series which represents the expected load in megabytes per second over the course of the download that would be produced, given the vehicle was triggered at the current time. This new load time series is then added to the accumulator. If at any future point in time, the accumulator shows a throughput higher than the maximum allowed value, the new load is not accumulated and the update will not be planned. Instead, the current download allowance is switched to red, meaning that every vehicle which is triggered after this point will not have OTA allowance. This again, invalidates the scores, as the change in allowance might result in different time performance across vehicle groups. Thus the algorithm breaks the second loop and triggers a recalculation of the scores.

If instead, the current allowance already is set to red, but the future, accumulated MNO load has reduced to a point which falls under the minimum set threshold, the light is toggled to green, again invalidating the scores. This constant switching between red and green light always keeps the throughput in the specified corridor. This has shown to work reliably in the simulation, as the large number of vehicles makes the consumption of throughput very predictable overall.

### Prioritization of Vehicles

As mentioned in prior chapters, the ADAPT algorithm uses scores to prioritize the vehicle queues and will always trigger vehicles from the queue with the highest score. These scores are calculated by a function over three arguments: $Score : \left(Time\times Allowance\times Features\right) \to R + ,$ where: Time is the current time instant when the update would be initiated, Allowance is the current download allowance, that would apply for this vehicle, and Feature are the feature values represented in the queue.

The result of the score function is a floating point number, where larger values indicate a better time performance for vehicles in the queue. As it is intended to prioritize vehicles that are likely to finish the update earlier - given the current time and allowance - this performance should be influenced by two main factors: (1) The likelihood of errors which lead to an overall termination of the update. This includes the possibility of timeouts during the download phase. Especially in instances where OTA downloads are not allowed, there is a rather high probability that some customers will never complete the download using the MyBMW app. It also includes errors during the check activation preconditions phase, that could for example be caused by old batteries that cannot be trusted to provide the required power for the activation of the update. (2) The duration until the completion of the update: This duration is generally influenced by many factors like the willingness of customers to accept the update or the time until the next rush hour in the corresponding time zone where updates are likely to be downloaded and accepted.

As outlined above, differences in distributions between vehicles in different feature groups can be observed, for both the error rates and durations. It is these differences that can be used as leverage to establish a prioritization and thus increase the time performance of the rollout. There are multiple ways in which the score could conceivably be calculated. A simulation-based approach was used, which will be described in the following.

The Score Function: To implement prioritization, a score function is proposed based on a simulation approach that leverages prediction models to estimate the expected duration and error rates of vehicle queues. Mathematically, the simulation function can be declared as: $Simulation : \left(Time\times Allowance\times Features\right) \to R + ∪ \left\{e\right\} ,$ where (Time × Allowance × Features) are the same parameters as for the score function.

The simulation is invoked *N* times, producing an empirical distribution of duration values *D* = {*d*1*, d*2, ... , *dn*}*,* with *n* ≤ *N* for all successful invocations and a number of errors *e*, with *N = e + n.*

To consolidate the simulation results into a single score suitable for comparison and sorting, an aggregation function specifically tailored to this use case is used. Straightforward methods, such as calculating the mean or median of the duration values, are inadequate because they introduce two significant issues: first, they cannot directly incorporate error rates into the score; second, the mean is highly susceptible to outliers, while the median tends to disregard outliers entirely. Both of these properties are undesirable for the use case, as the distribution of update durations typically exhibits high variance with a pronounced tendency toward outliers. While it is important not to place excessive emphasis on individual outliers, their prevalence and potential to significantly impact overall time performance cannot be ignored. To address these challenges, a modified version of the Area Under Completion Curve (AUCC) is used. This approach incorporates the empirical density function (EDF) of the simulation results defined as: $EDF \left(x\right) = \frac{1}{N} {\sum }_{i = 1}^{n} I \left({d}_{i}\leq x\right) ,$ where *N* is the total number of simulation invocations, and I (*di* ≤ *x*) is the indicator function, which equals 1 if *di* ≤ *x,* and 0 otherwise. This definition is derived from MS Waterman and DE Whiteman. 1978. Estimation of probability densities by empirical density functions. Using this EDF, the score is calculated as the normalized area under the curve, employing the trapezoidal rule to calculate that area: $Score = \frac{{\int }_{0}^{{d}_{max}} ED F \left(x\right) dx}{{d}_{max}}$ where *d*max represents the maximum duration from the current time to the end of the planning duration.

### Runtime Complexity and Optimizations

The ADAPT algorithm employs a brute force approach for vehicle prioritization. Given a predetermined start time and download allowance for an update, essentially all vehicles are considered candidates to be triggered next. While this method provides inherent advantages, careful attention must be given to runtime performance to ensure scalability.

Rationale for Brute Force: In general, a brute force approach is feasible because planning occurs prior to the rollout, providing sufficient time for calculations. Brute force methods can be advantageous as they tend to explore the entire solution space, ensuring optimal results compared to machine learning or meta-heuristic optimization techniques. However, these methods often face significant challenges when scaling to larger inputs. Given the conceivable need to consider millions of vehicles, an exhaustive search could become impractical without further consideration.

However, as individual vehicles are only defined in terms of their key attributes, many vehicles are practically identical from a modeling standpoint. This is naturally true as any model will need to reduce vehicle attributes into manageable subsets. As these identical vehicles are consolidated into queues and the score is only calculated over one representative vehicle per queue, the number of required score calculations decreases dramatically. In practice, there are about 3000 different queues for the vehicle features that were discussed above. Notably, this number is a lot smaller than the theoretical limit, as there are many feature combinations which are not exhibited in reality. For example, because BMW does not sell certain drive trains to some countries, the number of required score calculations reduces from millions to around 3000. Furthermore, this implies that the runtime complexity of ADAPT does not degrade as the number of vehicles increases. Instead of leading to additional queues, a higher number of vehicles simply results in larger queues, ensuring that the computation time for scoring remains constant.

In addition, the score calculations are inherently well-suited for parallelization. As prior validations ensure resource preservation during the rollout, the score for each representative vehicle can be computed in isolation. The decoupling of runtime from the number of vehicles makes it feasible to generate rollout plans for millions of vehicles within a reasonable time. This is especially true when leveraging cloud computing instances, as the heavy parallelization enables runtime to scale effectively with the number of available CPU cores. If faster processing is required, additional cores can be allocated to the computation. The associated costs are negligible compared to larger operational expenses, such as those incurred from MNO charges.

### Additional Optimizations

Although the brute force approach demonstrates feasible runtime, particularly if it were to be executed on cloud infrastructure during production use, it is desirable to enable faster execution locally for convenience during development. To achieve this, an additional optimization was implemented.

In production, the score calculation is triggered whenever there is any change in the current time or download allowance. The current time advances in increments of t, where t represents the time required for the RSU hub to compute the manifest. At the time of writing, t is approximately 5 minutes. Consequently, scores are invalidated with every 5-minute increment in time. In practice, these small time increments have minimal impact on the resulting scores. The influence of the exact initiation time on the scores becomes more noticeable over larger intervals, such as full hours. To utilize this, an additional parameter was introduced to the ADAPT algorithm, defining the time delta after which scores are invalidated. By setting this parameter to 30 minutes instead of five, processing time is effectively reduced by a factor of six, with little loss in precision. For development and testing purposes, larger time delta thresholds can be used to gain quick insights into performance. However, this comes at the cost of reduced optimization in the results.

### Influencing Factors

As stated in the previous section, ADAPT can be considered a brute force algorithm. This means that, while it looks rather simple on the surface, many factors are implicitly considered in the prioritization, that would otherwise need to be handled manually. This section aims to highlight some of the most important factors that ADAPT considers.

Times and Time zones: Updates are likely to progress during rush hours when customers are awake and interacting with their vehicle. Downloads are performed while the vehicle is driven and the prompt for the activation is shown when the vehicle is exited. On the other hand, there are times during which updates are unlikely to progress like during nighttime. As rush hours are determined by the working schedule of customers which are themselves defined by their local time zone, rush hours differ depending on the time zone in which a vehicle resides. These trends are very pronounced in the data and are respected in the prediction models. The prioritization of ADAPT will thus tend to delay the triggers for vehicles that are in time zones which are further away from working hours. This minimizes the idle time between an update being prepared but not progressed any further.

Error Rates: For some groups of vehicles, errors are more common than for others. For example, because batteries are older or vehicles tend to be parked at steep angles which prevent a safe activation of the update. As errors are respected in the score calculation, groups that are prone to errors will tend to be delayed, prioritizing the allocation of resources for updates that are likelier to succeed.

Suitable Download Allowances: There are customers who might be interested and willing to update, but will not or simply are not able to use the MyBMW app for downloads. Likewise, other customers might be both willing to use the app and activate the update. It is a desire to provide customers that are willing to update but do not use the app with OTA allowance while restricting OTA downloads for customers who are likely to use the app. As this behavior is respected in the predictions and will have an influence on the score calculations, ADAPT will tend to assign each vehicle with the download allowance that is required to complete the update.

Customer Interest: Groups that are likely to accept the update earlier will be prioritized. Thus ADAPT tends to first trigger updates for customers who are interested in the update. This is especially true for customers who have automatic updates enabled, as the check activation preconditions phase will be much shorter in these cases.

All of the factors mentioned above will be automatically weighed in a way that ensures timely and resource- efficient updates. Notably, the introduction of additional relevant features could serve to further increase the effectiveness of this approach.

### Results and Discussion

In the previous chapter, the ADAPT strategy was introduced, designed to address anticipated challenges associated with the less dedicated baseline strategy. The next step is to employ the simulation framework established in previous chapters to evaluate the effectiveness of this approach.

This chapter begins by defining three common scenarios for evaluation. The simulation results for both the baseline and ADAPT strategies are presented across these scenarios, in terms of the metrics and key performance indicators that were designed to capture rollout performance goals. Finally, the results are interpreted and discussed, focusing on problems that arise when relying on the baseline strategy and assessing the ability of ADAPT to address them.

### Scenarios for Strategy Evaluation

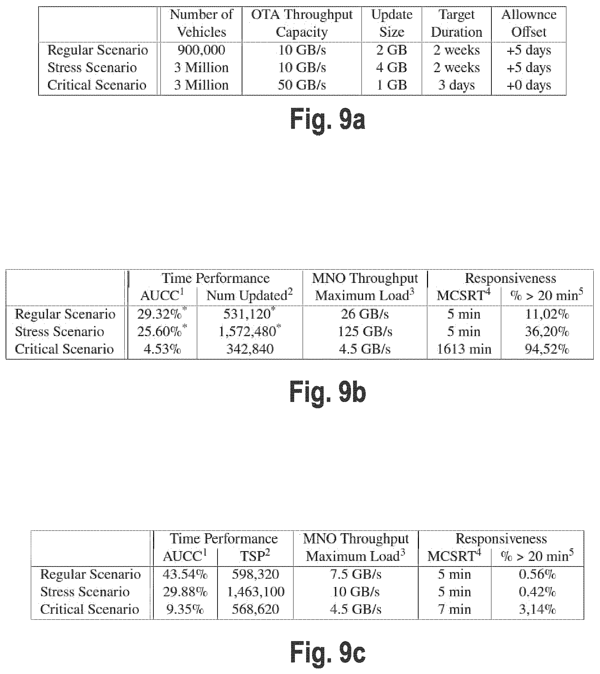

Fig. 9a shows a table of relevant attributes of the scenarios for evaluation. To allow for a direct comparison of strategies, it is useful to evaluate them under identical scenarios. Three potential real-world scenarios were selected and modeled to assess various aspects and objectives of software rollouts. Fig. 9a outlines the key attributes associated with each scenario. A detailed discussion of each scenario is provided in this section.

Across all scenarios, special care was taken to ensure a realistic distribution of vehicle feature values across entities. This was achieved by grouping vehicles based on their feature values presented in the empirical data sources analyzed for this disclosure. The proportion of vehicles in each group relative to the total vehicle population was calculated, and vehicle entities were instantiated accordingly to reflect these proportions.

Regular Scenario: The first scenario represents a standard software rollout, typical at the time of writing. This scenario involves a remote software update (RSU) with an update size of 2 GB, targeting 900,000 vehicles in the EMEA region. One primary objective during any regular rollout is to balance mobile network operations (MNO) costs with deployment timeliness, ensuring cost efficiency while maintaining reasonable time performance. For this scenario, an MNO throughput capacity of 10 Gb/s, which is commonly requested for rollouts in the EMEA region, is assumed. Additionally, the allowance of over-the-air (OTA) downloads is delayed by 5 days. This approach is commonly used as a cost-saving measure, as it encourages customers to use the MyBMW app for early adoption. The rollout is designed to meet a target duration of 14 days.

Stress Scenario: The second scenario serves as a stress test, designed to evaluate how strategies and update systems scale in anticipation of future demands. To reflect expected trends, the update size was doubled to 4 GB, and the number of vehicles increased to 3 million. The goal of balancing MNO costs with deployment timeliness still remains. Therefore, the challenge lies in achieving this without incurring additional costs for the larger fleet. Given the company's overall business goal of saving MNO costs, the maximum throughput is kept constant at 10 Gb/s. Similarly, the OTA allowance delay remains at 5 days, and the target duration for the rollout is maintained at 14 days. This scenario is used to test the ability to handle larger updates and a significantly expanded vehicle fleet under consistent resource constraints.

Critical Scenario: The third scenario represents a critical situation involving a software bug that requires immediate resolution. Examples could include newly identified security vulnerabilities or safety concerns arising from malfunctioning firmware. In this case, the timeliness of the rollout is paramount, as vehicles not updated in time must be manually serviced at dealerships, incurring costs of up to $100 - $300 per vehicle. This creates a strong incentive to update as many vehicles as quickly as possible to minimize financial losses and ensure safe and secure operations. Given this urgency, the target duration for the rollout was set to 3 days. OTA downloads are allowed immediately at the start of the rollout, as the cost of dealership interventions far outweighs the additional expenses of MNO traffic. To further prioritize speed, a maximum MNO throughput of 50 Gb/s was assumed, effectively removing network constraints during the rollout. The update size is reduced to 1 GB, as the rollout focuses solely on addressing the critical code without introducing new software features. The number of vehicles remains at 3 million, as the time sensitivity precludes separate, staggered rollouts. This scenario tests the system's ability to handle rapid, large-scale updates under tight time constraints.

These three scenarios reflect a range of potential real-world conditions, from standard rollouts to urgent fixes. Vehicle counts, update sizes, and throughput constraints are varied to provide a comprehensive basis for evaluating strategies under diverse demands and business goals. An effective strategy should allow addressing all these factors.

### Results of the Simulation

This chapter presents the results of the simulations for both the baseline and ADAPT strategies. Each strategy was evaluated under all three scenarios introduced in the previous section, resulting in a total of six simulation runs: Regular Scenario: A standard rollout reflecting current conditions, Stress Scenario: A stress test designed to assess the strategies' ability to manage anticipated future demands, and Critical Scenario: A high-priority bugfix rollout where timeliness is paramount.

For each strategy and scenario, the three primary metrics introduced in the beginning were analyzed, which define rollout performance in terms of timeliness, resource preservation, and responsiveness. Specifically, for resource preservation, mobile network operations (MNO) throughput was the focus, as this was identified as a critical bottleneck and demonstrated significant overloading during the simulations.

The results are presented in two parts: first, the outcomes for the baseline strategy are presented, followed by those for ADAPT, both in written and tabular form. To provide additional context, a selection of the most relevant charts are highlighted to illustrate key findings. A comprehensive discussion of these results, including a comparison of the two strategies, will follow in the next section.

### Results of the Baseline Strategy

Fig. 9b shows the simulation results of the baseline strategy, with the following footnotes: 1 AUCC: Area under the completion curve; 2 TSP: Total number of successfully updated vehicles in the target duration; 3 Maximum Load: Maximum MNO network load in the simulation period; 4 MCSRT: Median customer search response time; 5 % > 20 min: Percentage of responses exceeding 20 minutes; and * In reality, network throttling would extend download times, making results less favorable.

This section presents the simulation results of the baseline strategy across all three scenarios. Fig. 9b provides an overview of these results, focusing on the primary Key Performance Indicators (KPIs). Here, problems are identified and the groundwork for comparison with the ADAPT strategy is laid, which is discussed later in this chapter.

MNO Throughput: In the regular and stress test scenarios, the MNO throughput was capped at a maximum of 10 GB/s. In the regular scenario, a significant spike of approximately 20 GB/s was observed immediately after OTA downloads were allowed. Following this initial surge, the throughput consistently stayed below the 10 GB/s cap. For the stress test scenario, a similar spike occurred at the same moment. However, here it was far more pronounced, with throughput reaching a maximum of around 120 GB/s right after OTA downloads were permitted. After this peak, the throughput settled between 10 GB/s and 30 GB/s, indicating a sustained overload of MNO capacity from the fifth day until approximately the seventh day of the rollout. During this period, heavy MNO throttling measures would have been applied to manage traffic. In the critical scenario, the throughput cap of 50 GB/s was not reached. The throughput instead peaked at a maximum of 4.5 GB/s, remaining well within the set limits.

Responsiveness: Response times varied across the three scenarios. In the regular scenario, 11% of manual search requests took more than 20 minutes to complete, with a median response time of 5 minutes. Under the stress test scenario, delays became more pronounced, with 36% of search requests exceeding 20 minutes, while the median response time remained at 5 minutes. In the critical scenario, response times were consistently high, with nearly all search requests taking longer than 20 minutes to complete throughout the three-day rollout period.

Time Performance: In the regular scenario, 531,120 vehicles were successfully updated within the target duration of 14 days, achieving an AUCC value of 29.32%. Under the stress test scenario, 1,572,480 vehicles were updated with an AUCC of 25.60%.

However, it is important to note that in a real-world situation, time performance would likely be significantly worse due to external MNO throttling measures during periods of network overload. Technically, the baseline strategy would be disqualified for overloading MNO throughput. Nonetheless, these results are presented as they establish a baseline under the assumption of unlimited MNO capacity, providing a reference point for future comparison with ADAPT.

For both the regular and stress test scenarios, fewer updates were completed during the first five days of the rollout when OTA downloads were disallowed. Once downloads were permitted, a steep increase in completions over time was observed.

Finally, in the critical scenario, the baseline strategy managed to update 342,840 vehicles within the limited target duration of three days. This result can be considered reliable, as network throughput remained within acceptable limits.

### Results of the ADAPT Strategy

Fig. 9c shows simulation results of the ADAPT strategy, , with the following footnotes: 1 AUCC: Area under the completion curve; 2 TSP: Total number of successfully updated vehicles in the target duration; 3 Maximum Load: Maximum MNO network load in the simulation period; 4 MCSRT: Median customer search response time; and 5 % > 20 min: Percentage of responses exceeding 20 minutes.

This section presents the simulation results of the ADAPT strategy, following the same structure as the previous section. A summary of the key findings is provided in Fig. 9c, offering an overview of the strategy's performance across the three scenarios.

MNO Throughput: The simulation results indicate that MNO throughput remained within the maximum capacity across all scenarios. In the regular scenario, throughput initially rose to 6.5 GB/s on the first day of the rollout, peaked at 7.2 GB/s on the second day, and subsequently declined to 6 GB/s on the third day. Beyond this point, throughput decreased rapidly, remaining below 1 GB/s for the rest of the simulation period. A similar pattern was observed in the stress scenario. Here, throughput peaked at 9 GB/s on the first day, stayed between 10 GB/s and 6 GB/s for seven days, and gradually decreased over the following week. In the critical scenario, where MNO throughput was effectively uncapped, the same trend as in the baseline strategy was observed, with throughput peaking at around 4.5 GB/s, three days into the rollout.

Responsiveness: The ADAPT strategy demonstrated improved responsiveness across all scenarios. In both the regular and stress scenarios, less than 1% of manual search requests took longer than 20 minutes to respond, with a median response time of 5 minutes. In the critical scenario, 3.14% of requests exceeded the 20-minute threshold, while the median response time remained consistent at 5 minutes.

Time Performance: Unlike the baseline strategy, ADAPT did not overload MNO throughput, allowing its results to be taken at face value. In the regular scenario, 598,320 vehicles were successfully updated within the target duration of two weeks, achieving an AUCC of 43.54%. Under the stress test scenario, 1,463,100 vehicles were updated. Most notably, in the critical scenario, where performance is most crucial, 568,620 vehicles were updated. This represents an increase of 225,780 vehicles, or 60.29%, compared to the baseline strategy.

### Selected Charts

To provide a more holistic perspective, this section presents a selection of charts derived from the simulations. While responsiveness is effectively conveyed through simple KPIs, the analysis of time performance and MNO throughput benefits from a visual representation. The focus lies on comparing MNO throughput handling in the stress scenario, as the same trends are also observed in the regular scenario. Additionally, time performance is compared between the baseline and ADAPT strategies for both regular and critical scenarios. A comparative chart for the stress test scenario is excluded, as heavy MNO throughput overloading renders the baseline strategy's results largely unrealistic.

### MNO Throughput under the Stress Test Scenario

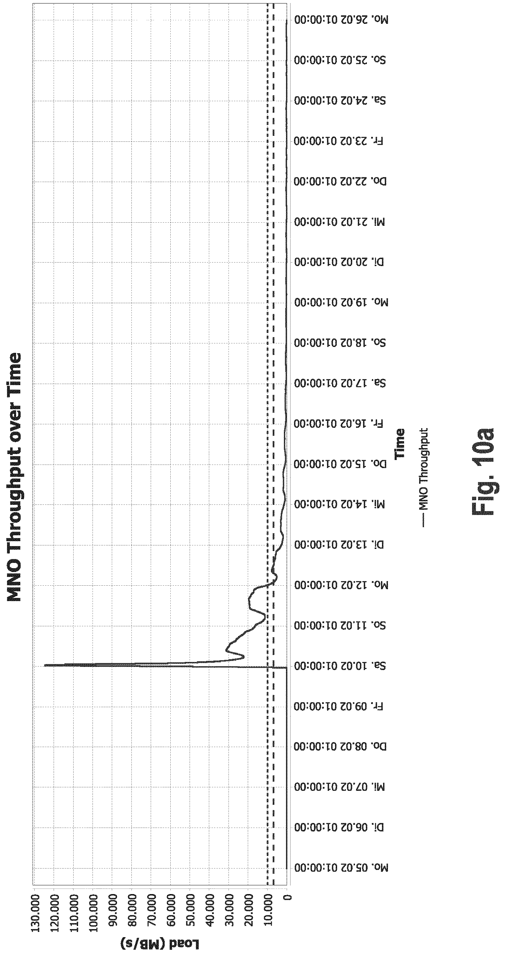

Figs. 10a and 10b show a comparison of MNO throughput consumption under the stress test scenario. Fig. 10a and 10b illustrate the MNO throughput consumed during the simulation under the stress test scenario for both the baseline strategy (Fig. 10a) and the ADAPT strategy (Fig. 10b). In the baseline strategy, a sudden surge in throughput is observed, followed by a period of two days characterized by constant overloading. In contrast, the ADAPT strategy effectively constrained throughput around 8 GB/s for seven days, ensuring that no overload occurred.

### Time Performance under the Regular Scenario

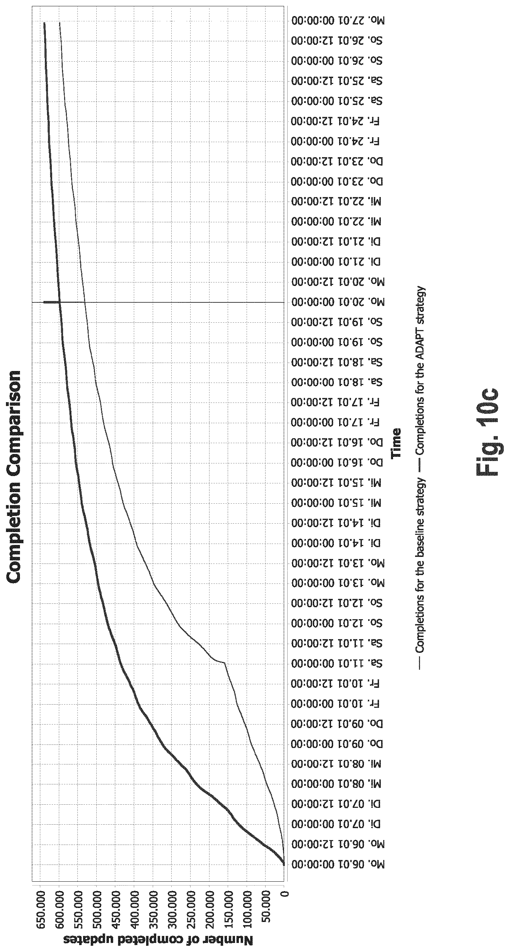

Fig. 10c shows a comparison of time performance under the regular scenario. Fig 10c compares update completions over time for the baseline and ADAPT strategies under the regular scenario. For the baseline strategy, a noticeable increase in the completion rate is observed after OTA downloads were allowed on the fifth day. In contrast, the ADAPT strategy achieves a higher completion rate from the outset, maintaining better performance throughout the simulation period, even without considering the external MNO throttling for the baseline strategy.

### Time Performance under the Critical Scenario

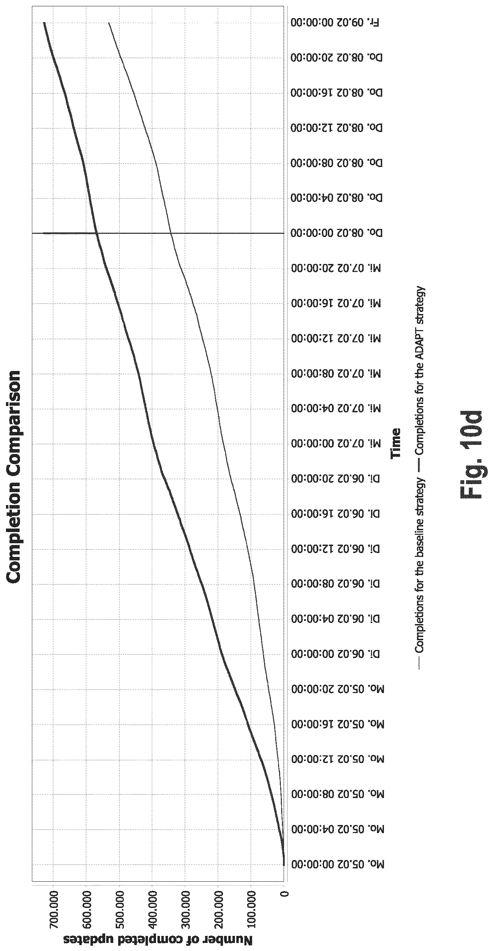

Fig. 10d shows a comparison of time performance under the critical scenario. Fig. 10d compares update completions for the baseline and ADAPT strategies under the critical scenario. Although OTA downloads were allowed immediately at the start of the rollout for the baseline strategy, ADAPT demonstrates better time performance throughout the simulation period.

### Discussion of Results

The previous chapter presented the outcomes of a total of six simulation runs, providing insights into the performance of the baseline and ADAPT strategies. In this chapter, these results are discussed by identifying problems and evaluating how effectively ADAPT addresses them, followed by a discussion of the limitations of the evaluation.

### Summary and Interpretation of Results

The results highlight four key dimensions of the evaluation that require focused attention: spikes in MNO throughput, sustained throughput overload, lengthy customer search response times, and overall time performance. Each of these aspects reveals distinct problems with the baseline strategy, which is detailed first.

### Problems of the Baseline Strategy

The results of the baseline strategy reveal four main issues concerning time performance, resource preservation, and responsiveness across the three evaluated scenarios. These problems highlight the limitations of the baseline approach, particularly in handling the large-scale rollouts which will be required in order to meet the increasing demands. Each of the following sections will address one specific problem, illustrating where improvements are needed.

Throughput Spikes: One significant issue observed in the baseline strategy was the occurrence of large throughput spikes immediately following the permission for OTA downloads, in both the regular and stress scenarios. These spikes were the result of updates being initialized at a constant rate, while many vehicles had not yet completed their downloads using the MyBMW app. This backlog of vehicles resulted in a sudden, simultaneous attempt to download the artifacts as soon as OTA downloads were permitted. The baseline strategy lacks a mechanism for controlling and gradually allowing downloads, which led to an uncontrolled surge in network throughput. Given the magnitude of these spikes, accounting for them through an increase in MNO throughput over the entirety of the rollout period would be unrealistic and costly.

Throughput Exhaustion: While the 10GB/s MNO throughput limit was generally sufficient for the 900,000 vehicles in the regular scenario, it was inadequate for handling the 3 million vehicles in the stress test scenario. In addition to the throughput spikes discussed earlier, consistent overloading of the MNO throughput was observed throughout the rollout period.

Since the baseline strategy lacks a mechanism to fine-tune the timing of OTA downloads, the options while planning a rollout become limited. One option is to increase the MNO throughput limit, but this is generally undesirable as it implies higher costs. Another possibility is to eliminate OTA downloads altogether. However, this would significantly reduce coverage and increase rollout times. Previous campaigns without OTA allowance have demonstrated stagnation at lower vehicle coverage levels, and the simulation results indicate reduced completion rates during periods without OTA allowance. Finally, the strategy could rely on external MNO throttling, but that loses control over network traffic, making it difficult, if not impossible, to prioritize traffic from certain vehicles as part of strategic prioritization efforts. This loss of control would manifest in diminished time performance during rollouts.

Customer Search Response Times: A significant number of customer search responses exceeded the maximum acceptable upper limit of 20 minutes. This issue stems from the RSU hub operating at a constant 100% utilization, leaving no capacity to account for the occurrence or distribution of manual searches. Since the baseline strategy lacks a mechanism to prioritize or preserve resources for manifest creation while handling these requests, they were often delayed, stuck in queues, and processed only after unpredictable and lengthy wait times.

Time Performance: While fully utilizing 100% of RSU capacity for manifest creation and disregarding manual searches, the baseline strategy does not make any effort to prioritize vehicles. As a result, its time performance consistently lagged behind the ADAPT strategy across the regular and critical scenarios.

An exception is observed in the stress scenario, where more vehicles were updated by the targeted rollout end-time. However, this outcome is attributable to the baseline strategy exceeding MNO throughput capacity by approximately 1200% at its peak. In general, this shortcoming in timeliness is further exacerbated by the simulation not accounting for external throttling; in reality, significant throttling would occur during periods of throughput exhaustion. Consequently, the results represent an optimistic lower limit of timeliness, particularly for the stress test scenario.

In the critical scenario, where timeliness is essential, the baseline strategy managed to update only 342,840 vehicles within the constrained target time of three days, which served as a direct baseline for comparison with ADAPT.

### Solutions Offered by ADAPT

The issues identified in the previous section demonstrate that the baseline strategy falls short in preserving resources, ensuring system responsiveness, and achieving optimal time performance. In contrast, the ADAPT strategy was specifically designed to address these shortcomings and provide solutions that will be outlined in the following sections.

Throughput Spikes: ADAPT exerts more precise control over OTA downloads by managing allowances on a per-vehicle basis. This enables the implementation of strategies like the red light, green light planning approach, which ensures that throughput stays in a predictable corridor. The results demonstrate that this method effectively preserves MNO throughput while maintaining timeliness in downloads and update completions. Unlike the baseline strategy, ADAPT avoids significant spikes in throughput, as download allowances are distributed incrementally rather than being granted to all vehicles simultaneously.

Throughput Exhaustion: ADAPT introduces the ability to define minimum and maximum thresholds for MNO throughput, ensuring controlled utilization of network resources. Results confirm that the observed throughput remains under the maximum capacity throughout the rollout. This stability is achieved because, while individual vehicle behavior remains fundamentally random in both reality and the simulation, the aggregate network consumption of a large number of vehicles becomes highly predictable. While throughput is still regulated by delaying OTA allowances for certain vehicles, ADAPT employs an intelligent allocation of these allowances, prioritizing vehicles that are most likely to complete the update successfully after downloading, and delaying those for which a completion is more unlikely. This prioritization ultimately leads to better time performance.

Customer Search Response Times: ADAPT considers the occurrence and distribution of manual search requests during planning, reserving RSU hub capacity to handle them. This approach has proven reliable due to the large number of vehicles and the strong alignment of customer searches with daily and weekly patterns. Additionally, update processes triggered by manual searches are prioritized during scheduling. Results show significant improvements when compared to the baseline strategy, although not all delays are eliminated. In the critical scenario, around 3% of requests still took longer than 20 minutes to process. During the start of a rollout period, all search requests originating from the targeted fleet involve a manifest creation. This can create a backlog in handling customer searches, even with prioritization in place. However, within the feasibility-based constraints of the planning and scheduling interface, further optimization is not possible. Despite this, ADAPT demonstrates clear advantages in reducing customer search response times. Future work may focus on additional methods to achieve fully optimal responsiveness.

Time Performance: ADAPT prioritizes vehicles that are expected to complete the update earlier, given a specific initiation time download allowance. This leads to an efficient utilization of RSU capacity and MNO throughput, especially towards the start of the rollout period. Results show that this approach improves timeliness across the regular and critical scenarios, even without factoring in external MNO throttling. Most notably, in the critical scenario, ADAPT updated 568,620 vehicles within the 3-day target, a 60% improvement compared to the 342,840 vehicles updated using the baseline strategy. These findings underscore the effectiveness of strategic prioritization, especially in scenarios where timeliness of updates is essential.

The overarching purpose of this disclosure is not only to present a strategy for software update rollouts but also to inspire and guide future work in this area at BMW. While the proposed concepts have been developed with real-world feasibility in mind, they remain at the proof-of-concept stage. This opens up two directions for future work: advancing the theoretical foundation through further research and translating these ideas into a practical implementation. This section provides guidance to support both paths and aims to offer a starting point for continued exploration and application.

Although relatively minor for the specific use case, there are certain limitations in the evaluation presented in this disclosure that may be addressed.

Inclusion of App Installations: While the simulation does account for app downloads and installations as part of the update process structure, more comprehensive data may be used to improve the prediction and validation of app installation process components, thereby providing a more holistic evaluation of all update components.

Incorporate External MNO Throttling: Given one primary goal of any strategy is to avoid overloading any resource, the simulation of behavior during overload scenarios is not critical to the current model. However, the simulation could be expanded to incorporate external network throttling, e.g., within the prediction model for the download phase. This would provide more realistic results during periods of network exhaustion.

Incorporate Yearly Patterns: In this disclosure, the focus was on general daily and weekly patterns in vehicle usage. However, focusing on yearly trends may uncover additional valuable insights, particularly around holidays. Future work could further explore the concept of time series forecasting by incorporating specialized methods, such as Meta's Prophet model, to capture these seasonal patterns.

### Improving Time Performance

While ADAPT demonstrates significant improvements in time performance when compared to the baseline, further enhancements are possible with relatively little additional effort. The most promising area for improvement is the incorporation of more diverse and relevant vehicle features into the prediction models. Such new features could include: fleet ownership status (privately owned vs. part of a commercial fleet), vehicle age since the point of sale or manufacturing, and cost segment (e.g., high, middle, and entry class).

The inclusion of additional features will result in more differentiated vehicle groups, which automatically leads to more refined predictions and improved prioritization in ADAPT. The proposed approach for associating features with prediction models can be used to semiautomatically select the most relevant features for any given task. Furthermore, ADAPT is designed to automatically incorporate and weigh these features during prioritization, without the need for changes to the code base. As a result, the inclusion of additional features is expected to further optimize time performance automatically.

### Fully Automating Data Analysis

The data analysis conducted in this work essentially captures the current correlation between vehicle features and customer behavior. However, as new data becomes available, or as the relationships between features and prediction targets evolve, it will be beneficial to adapt the models accordingly. This means that the model fitting process is reexecuted at regular intervals to maintain accuracy and relevance. A manual workflow includes manually executing the prewritten SQL queries from the project files, downloading the results, and running a shell command to fit the models. Additionally, when new features are introduced, the association of these features with prediction models requires a manual preselection step. This process can be fully automated. By directly interfacing with database servers and automating the feature preselection, it would be possible to seamlessly incorporate new features and keep the models up to date. This automation could streamline the workflow, making maintenance effortless.

### Implementation Guidelines

The ideas presented in this disclosure mainly serve to provide a foundation that can be adapted to suit more current and future use cases. However, given the focus of the work on practical feasibility, an actual implementation is not beyond reach. This chapter offers guidance for translating these ideas into a real-world implementation, outlining how such an endeavor might be approached. Of course, the suggestions provided here are intended as recommendations and do not serve as prescriptive instructions.

A software-driven framework comprising five components is proposed: Metrics and KPIs to quantify rollout performance, a scenario data structure to represent static entities and their relationships, a simulation to capture the sequence and structure of update processes, prediction models to forecast relevant customer behavior, and a strategy to improve rollout timeliness while preserving resources.

The decoupled nature of this framework proved effective during practical work, as each component addresses a distinct and essential aspect of the research task. Consequently, a real-world implementation may adhere to this modular structure. Each component could be developed as a separate microservice or package within the new Campaign Management for You (Comfy) system. In the following sections, more detailed thoughts and recommendations for implementing each of these components, based on research and practical experience.

Scenarios: To fully realize the scenarios proposed, this representation would need to be expanded by associating various features with the VINs of vehicles. This step is beneficial, as it establishes the foundation for strategic optimization, as well as for conducting simulations and predicting customer behavior. A system could interface with external services to collect the necessary information, therefore establishing a more holistic model of the vehicles involved in rollouts.

Simulation: In this disclosure, a simulation was used as the central component to develop and evaluate strategies. While this had been a necessity for research, a simulation could also serve as a valuable standalone tool in practice. A well-designed and actively maintained simulation, that is updated in line with evolving systems, could provide several operational advantages, including predicting resource usage and enabling accurate cost estimates, estimating timeliness of rollouts, supporting the development, maintenance, and improvement of strategies, and identifying potential issues before a rollout begins. Moreover, a simulation could offer practical guidance for business decisions, such as assessing the costs and benefits of increasing MNO throughput capacity or evaluating the anticipated impact of a higher ratio of vehicles with automatic updates enabled.

Metrics and KPIs: The metrics and KPIs introduced in this disclosure proved effective in capturing the performance of rollouts, both in detail and at a glance. There is little that needs to be altered in terms of the fundamental concepts and calculations behind these metrics. To enhance their practical integration, a dashboard UI may be used to display the proposed graphs and KPIs for rollouts. A decoupled component could be developed to provide a common codebase for handling metrics collected from both simulation runs and actual rollouts. This would ensure consistency and thus enable the direct comparison between expectations, derived from simulation runs, and data from actual rollouts, providing a framework for iterative improvement and maintenance.

Prediction Models: The prediction of customer behavior is not only crucial for simulations but also serves as the foundation for strategic resource conservation and time optimization. Any strategy that relies on assumptions about customer behavior will inherently need to incorporate forecasting in some sense. Given the inherent complexity of some predictions, it is recommended to decouple the prediction tasks, define clear interfaces, and use specialized models for each specific prediction. The tasks and models proposed in this work can provide a solid starting point for such efforts. However, as emphasized earlier, prediction models may be re-fitted, maintained, refined, and validated regularly to ensure their accuracy and relevance over time. Since this process can become maintenance-intensive, an automated system for data analysis may be implemented. This system could streamline the management and upkeep of prediction models, ensuring their long-term utility and performance.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

## Claims

1. A computer-implemented method for prioritizing deployment of updates for a fleet of vehicles, the method comprising:
obtaining (110) information on vehicles of the fleet of vehicles;
determining (120), based on the information on the vehicles, a score, with the score being based on a likelihood that an update deployed to the vehicle is installed within a defined time frame after deployment;
determining (130) a prioritization of vehicles, with the prioritization prioritizing vehicles having a score indicating a higher likelihood of the update being installed within the defined time frame after deployment over vehicles having a score indicating a lower likelihood of the update being installed within the defined time frame after deployment; and
deploying (160) an update to the fleet of vehicles based on the prioritization.

2. The method according to claim 1, wherein the update is deployed (160) gradually to the vehicles of the fleet of vehicles according to the prioritization.

3. The method according to claim 2, wherein the update is deployed (160) gradually based on a cellular bandwidth being available for the deployment.

4. The method according to claim 3, wherein the update is deployed (160) to additional vehicles until a share of cellular bandwidth used reaches an upper threshold, with the deployment to additional vehicles being continued when the share of cellular bandwidth used drops under a lower threshold.

5. The method according to one of the claims 1 to 4, wherein the prioritization is determined (130) for deployment of the update via a cellular mobile communication transceiver of the respective vehicle.

6. The method according to one of the claims 1 to 5, wherein the information on a vehicle indicates whether automatic updates are enabled for the vehicle, and the score is based on whether automatic updates are enabled for the vehicle.

7. The method according to one of the claims 1 to 6, wherein the information on a vehicle indicates whether the update or one or more past updates has or have been requested manually by a user of the vehicle, and the score is based on whether the update or the one or more past updates has or have been requested manually by the user of the vehicle.

8. The method according to one of the claims 1 to 7, wherein the information on the vehicle indicates one or more likely error conditions being present, such as parking of the vehicle at a steep angle or degradation of a battery of the vehicle, and the score is based on the one or more likely error conditions being present.

9. The method according to one of the claims 1 to 8, wherein the information on a vehicle indicates a time between deployment of one or more past updates and installation of the respective update in the vehicle, and the score is based on an average or median time between deployment of past updates and installation of the past updates for the vehicle.

10. The method according to one of the claims 1 to 9, wherein the information on a vehicle indicates a time zone the respective vehicle is in, and the score is based on a time at which deployment of the update is scheduled to start relative to the time zone the vehicle is in.

11. The method according to one of the claims 1 to 10, wherein the information on a vehicle indicates a usage pattern of the vehicle, and the score is based on a usage pattern of the vehicle.

12. The method according to one of the claims 1 to 11, wherein the information on a vehicle indicates whether a user of the vehicle uses a mobile application for controlling one or more aspects of the vehicle, and the score is based on whether a user of the vehicle uses the mobile application, wherein the score is based on whether the user of the vehicle has previously installed at least one update via the mobile application.

13. The method according to one of the claims 1 to 12, wherein the prioritization is determined (130) or adjusted (140) based on an output of a machine learning model being trained to output, based on the information on a vehicle, information on a likelihood that an update deployed to a vehicle is installed within a defined time frame after deployment
and/or wherein the method comprises simulating (150) deployment of the update based on the prioritization, and adjusting (155) the prioritization based on the simulation.

14. A computer program having a program code for performing the method of one of the claims 1 to 13, when the computer program is executed on a computer, a processor, or a programmable hardware component.

15. An apparatus (10) for prioritizing deployment of updates for a fleet of vehicles, the apparatus comprising one or more interfaces (12) and one or more processors (14), wherein the apparatus is configured to perform the method according to one of the claims 1 to 13.
